(19) Europäisches Patentamt
European Patent Office
Office européen des brevets

(11) Veröffentlichungsnummer : **0 020 293**
**B1**

(12) # EUROPÄISCHE PATENTSCHRIFT

(45) Veröffentlichungstag der Patentschrift : **23.05.84**

(21) Anmeldenummer : **80810132.3**

(22) Anmeldetag : **21.04.80**

(51) Int. Cl.³ : **C 07 D401/04**, C 07 D401/06, C 08 K 5/34

(54) **Stabilisatoren, Verfahren zu ihrer Herstellung und diese enthaltende Zusammensetzungen.**

(30) Priorität : **27.04.79 CH 3991/79**

(43) Veröffentlichungstag der Anmeldung : **10.12.80 Patentblatt 80/25**

(45) Bekanntmachung des Hinweises auf die Patenterteilung : **23.05.84 Patentblatt 84/21**

(84) Benannte Vertragsstaaten : **DE FR GB IT**

(56) Entgegenhaltungen :
**DE-A- 2 349 962**
**DE-A- 2 721 626**
**US-A- 2 993 021**
**US-A- 4 138 243**

(73) Patentinhaber : **CIBA-GEIGY AG**
**Postfach**
**CH-4002 Basel (CH)**

(72) Erfinder : **Karrer, Friedrich, Dr.**
**Rebbergstrasse 5**
**CH-4800 Zofingen (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 020 293 B1

Jouve, 18, rue St-Denis, 75001 Paris, France

**Beschreibung**

Die Erfindung betrifft neue Pyrrolidone, Verfahren zu ihrer Herstellung, ihre Verwendung als Stabilisatoren, sowie mit ihrer Hilfe gegen lichtinduzierten und thermischen Abbau stabilisiertes organisches Material.

Pyrrolidone sind bekannt, so aus der US-PS 2.993.021, gemäss der zwei Pyrrolidonreste über die Stickstoffatome durch Alkylen, Oxaalkylen oder Azaalkylen verbunden sind und die als Weichmacher für PVC, als Monomere für Additionspolymere sowie zur Herstellung von Alkydharzen dienen. Aus der DE-OS 2 721 626 sind Pyrrolidone mit einer Polyoxialkylenkette am Stickstoffatom bekannt, die als Härter bzw. Härtungsbeschleuniger von Epoxidharzen und Polyurethanschäumen dienen.

Es wurde nun gefunden, dass Pyrrolidone mit einem 2,2,6,6-Tetraalkylpiperidinrest am N-Atom wertvolle Stabilisatoren für Polymere sind, die neben einer hervorragenden Lichtschutzwirkung keine Verfärbung im Substrat zeigen, thermostabil und schwer aus dem Substrat zu extrahieren sind.

Die Erfindung betrifft Pyrrolidone der Formel I oder deren Salze

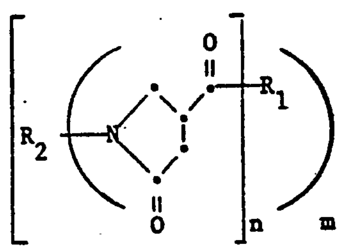

(I)

worin n 1, 2, 3 oder 4 ist, und m 1 oder 2 ist, wobei bei n gleich 2, 3 oder 4 m 1 ist und $R_1$ eine Hydroxylgruppe ist, deren Wasserstoffatom gegen ein Aequivalent Ca, Mg, Al, Zn, Co oder Ni ausgetauscht sein kann, und bei n gleich 1 $R_1$ $C_{1-20}$-Alkoxy, $C_{3-20}$-Oxaalkoxy, $C_{3-20}$-Alkenyloxy, $C_{3-6}$-Alkinyloxy, $C_{5-7}$-Cycloalkoxy, $C_{6-18}$-Aryloxy, ($C_{1-8}$-Alkyl)-phenoxy, Halogenphenoxy, Hydroxyphenoxy oder ($C_{1-8}$-Alkyl)-hydroxyphenoxy, ferner $C_{7-16}$-Aralkoxy, das im Phenylkern durch $C_{1-8}$-Alkyl, Halogen und/oder Hydroxy substituiert sein kann, ferner 2-Hydroxyäthoxy, das in 2-Stellung Methyl tragen und zudem in 2-Stellung Phenyl oder Phenoxymethyl tragen kann, ferner Amino, $C_{1-20}$-Alkylamino, $C_{3-14}$-Alkenylamino, Di-$C_{1-20}$-alkylamino, Di-$C_{3-14}$-alkenylamino, $C_{5-7}$-Cycloalkylamino, Di-$C_{5-7}$-cycloalkylamino, $C_{6-18}$-Arylamino, ($C_{1-8}$-Alkylphenyl)-amino, (Halogenphenyl)-amino, (Hydroxyphenyl)-amino, oder ($C_{1-8}$-Alkyl-hydroxyphenyl)-amino, wobei die Aminogruppe als weiteren N-Substituenten $C_{1-8}$-Alkyl tragen kann oder $R_1$ einen Rest der Formel IVa

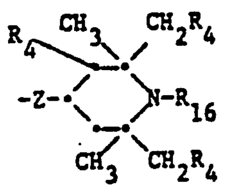

(IVa)

bedeutet, worin $R_4$ H oder Methyl ist, $R_{16}$ H, $C_1$-$C_{16}$ Alkyl, $C_3$-$C_8$-Alkenyl, Propargyl, $C_7$-$C_{16}$ Aralkyl, $C_1$-$C_4$ Alkanoyl, $C_3$-$C_5$ Alkenoyl, $C_3$-$C_6$ β-Hydroxyalkyl, $C_8$-$C_{12}$ β-Hydroxyaralkyl, ($C_1$-$C_4$ Alkoxycarbonyl)-methyl, Oxyl oder 2-Hydroxy-3-phenoxy-propyl ist, und Z gleich O, NH oder $NR_z$ ist, wobei $R_z$ $C_{1-12}$ Alkyl ist, und $R_1$ bei n gleich 2 —O—$R_3$—O— ist, worin $R_3$ $C_{2-20}$ Alkylen, $C_{4-8}$ Alkenylen, $C_4$ Alkinylen, $C_{5-6}$ Cycloalkylen, $C_{6-10}$ Arylen oder $C_{7-16}$ Aralkylen ist, oder eine Gruppe der Formel V

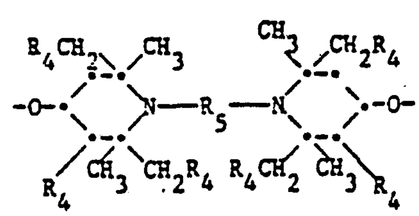

(V)

mit $R_4$ gleich H oder Methyl und $R_5$ gleich 2-Butenylen oder p-Phenylendimethylen ist, oder $R_1$ ferner —N($R_6$)—$R_7$—N($R_6$)— ist, wobei $R_6$ H, $C_{1-6}$ Alkyl, $C_{3-5}$ Alkenyl, $C_{5-6}$ Cycloalkyl, Phenyl, $C_{7-12}$ Aralkyl oder 2,2,6,6-Tetramethylpiperidin-4-yl mit H, Methyl oder Benzyl am Piperidin N-Atom, und $R_7$ gleich $C_{2-12}$ Alkylen, $C_{3-12}$ Oxaalkylen, $C_{3-12}$ Azaalkylen, $C_{6-12}$ Arylen, $C_{8-15}$ Aralkylen, $C_{5-6}$ Cycloalkylen bedeutet, und $R_1$ ferner —O—$CH_2$—C(OH)($R_8$)—$R_9$—C(OH)($R_8$)$CH_2$—O— ist, wobei $R_8$ H oder Methyl

oder die beiden Reste $R_8$ zusammen mit dem sie bindenden Rest einen 5- oder 6-gliedrigen Cycloalkyl-Ring bilden können, und mit $R_9$ eine direkte Bindung, $C_{1-6}$ Alkylen, $C_{3-6}$ Oxaalkylen oder mit $R_9$ eine Gruppe der Formel VI oder VII

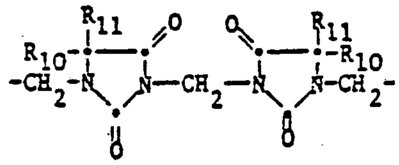 (VI) oder 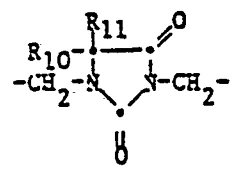 (VII)

bildet, worin $R_{10}$ und $R_{11}$ H oder $C_{1-4}$ Alkyl oder $R_{10}$ und $R_{11}$ zusammen Tetramethylen oder Pentamethylen bedeuten, und $R_1$ bei n gleich 3 einen Trioxyrest eines $C_{3-20}$ Alkantriols, in dem ein C-Atom an nicht mehr als ein O-Atom gebunden ist, bedeutet oder $R_1$ ein Rest VIII

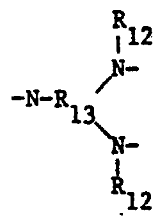 (VIII)

ist, wobei $R_{12}$ H, $C_{1-4}$ Alkyl, $C_{3-5}$ Alkenyl, Phenyl oder Benzyl, und $R_{13}$ ein dreiwertiger Rest, abgeleitet von $C_{3-20}$ Alkyl, $C_{6-12}$ Aryl oder $C_{7-16}$ Aralkyl, ist, oder $R_1$ ferner einen Rest IX

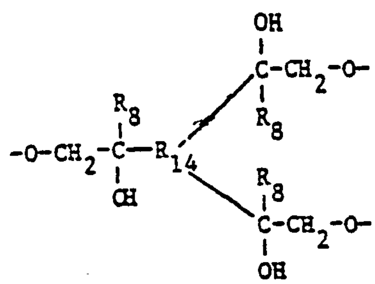 (IX)

bedeutet, wobei $R_8$ H oder Methyl ist, oder zwei Reste $R_8$ zusammen mit dem sie bindenden Rest einen 5- oder 6-gliedrigen Cycloalkyl-Ring bilden, und $R_{14}$ ein dreiwertiger Rest, abgeleitet von $C_{3-18}$ Alkyl, ist, oder $R_{14}$ eine Gruppe der Formeln X oder XI

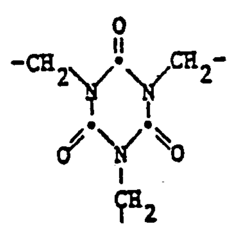 (X)

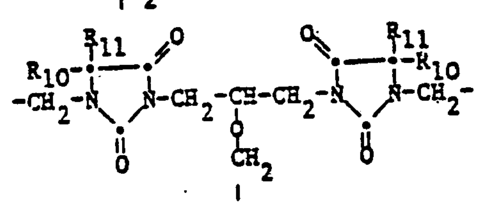 (XI)

bedeutet, wobei $R_{10}$ und $R_{11}$ H oder $C_{1-4}$ Alkyl sind, oder $R_{10}$ und $R_{11}$ zusammen Tetramethylen oder Pentamethylen bedeuten, und $R_1$ bei n gleich 4 einen Tetraoxyrest eines $C_{4-20}$ Alkantetrols, in dem ein C-Atom an nicht mehr als ein O-Atom gebunden ist, bedeutet, oder $R_1$ ein Rest XII

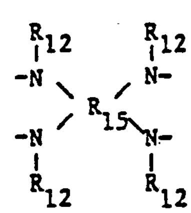 (XII)

ist, wobei $R_{12}$ H, $C_{1-4}$ Alkyl, $C_{3-5}$ Alkenyl, Phenyl oder Benzyl bedeutet, und $R_{15}$ einen 4-wertigen Rest, abgeleitet von $C_{3-20}$ Alkyl, $C_{6-12}$ Aryl oder $C_{7-16}$ Aralkyl, bedeutet, und der Substituent $R_2$ in der Formel I bei m gleich 1 einen Rest XIII, XIV oder XV bedeutet

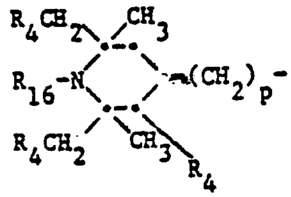

(XIII)

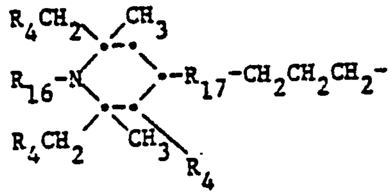

(XIV)

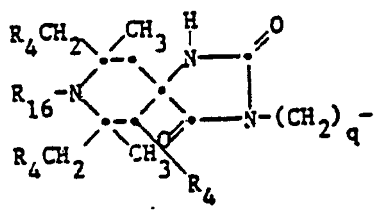

(XV)

worin $R_4$ und $R_{16}$ die oben angegebene Bedeutung haben, p 0 oder 2 ist, $R_{17}$ O oder $NR_{18}$ ist, $R_{18}$ H, Methyl, Benzyl, Allyl oder $C_{2-5}$ Alkanoyl ist, und q 2, 3, 4 oder 5 ist, und der Rest $R_2$ bei m gleich 2 einen Rest XVI, XVII, XVIII, XIX oder XX bedeutet

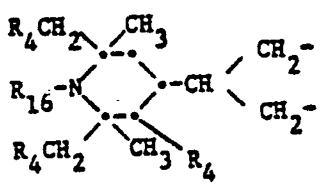

(XVI)

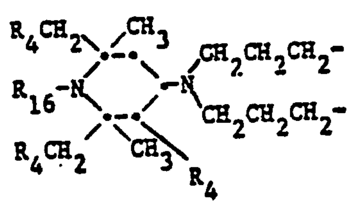

(XVII)

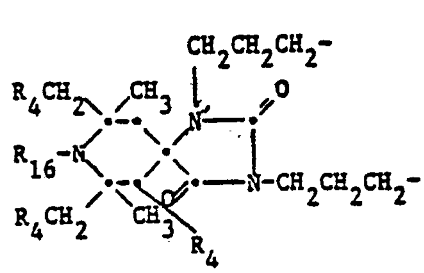

(XVIII)

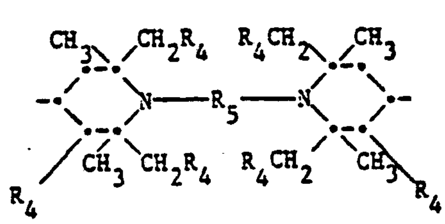

(XIX)

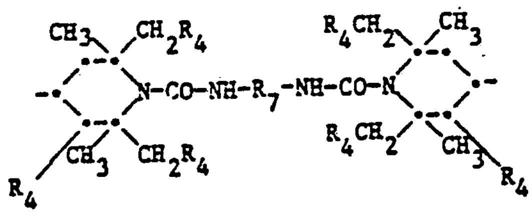

(XX)

worin $R_4$, $R_5$, $R_7$ und $R_{16}$ obige Bedeutung haben, sowie Pyrrolidone, welche durch Verknüpfung von $R_1$ und $R_2$ oligomerisiert oder polymerisiert werden können, und der Formel III entsprechen

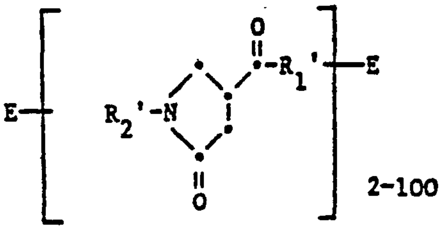

(III)

worin $R_1'$ und $R_2'$ den Resten $R_1$ und $R_2$ entsprechen und E H oder $C_{1-6}$ Alkoxy ist.

Als Salze kommen solche mit anorganischen oder organischen Säuren in Betracht, sowie Komplexsalze, wie solche mit Nickelverbindungen. Zur Salzbildung befähigt sind insbesondere solche Verbindungen, die ein basisches N-Atom enthalten. Geeignete Säuren sind z. B. Salz-, Schwefel- oder Phosphorsäure, oder auch Essigsäure, Ameisensäure, Salicylsäure, Toluolsulfonsäure, Diäthylphosphorsäure, Phenylphosphorsäure, Diphenylphosphinsäure, 4-Dodecylbenzolsulfonsäure oder Maleinsäuremonoester.

Bevorzugt sind Pyrrolidone der Formel I, worin n 1 oder 2 ist und $R_1$ eine Hydroxylgruppe ist, deren Wasserstoffatom gegen ein Aequivalent Ca, Mg, Al, Zn, Co oder Ni ausgetauscht sein kann, und ferner $R_1$ bei n gleich 1 $C_{1-12}$ Alkoxy, Amino, $C_{1-12}$ Alkylamino oder Di-$C_{1-12}$-alkylamino ist, $R_1$ bei n gleich 2 $C_{2-8}$ Alkylendioxy oder $C_{2-8}$ Alkylendiamino ist, m 1 ist, und $R_2$ ein Rest XIII

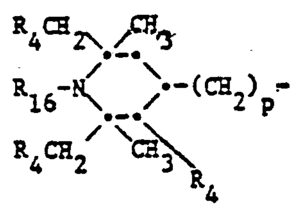

(XIII)

ist, worin p Null ist, $R_4$ H ist, und $R_{16}$ H, $C_{1-8}$ Alkyl, Benzyl, $C_{1-4}$-Alkanoyl oder $C_{2-6}$ β-Hydroxyalkyl ist.

Besonders bevorzugt sind Pyrrolidone der Formel III, worin n 1 ist und $R_1$ eine Hydroxylgruppe ist, deren Wasserstoffatom gegen ein Aequivalent Ca, Mg, Al, Zn, Co oder Ni ausgetauscht werden kann, und ferner $R_1$ $C_{1-6}$ Alkoxy, Amino, $C_{1-6}$ Alkylamino oder Di-$C_{1-6}$-alkylamino ist, m 1 ist, und $R_2$ ein Rest XIII ist, worin p Null ist, $R_4$ H ist, und $R_{16}$ H, Methyl oder Benzyl ist.

Besonders bevorzugt sind ausserdem Pyrrolidone der Formel III, worin $R_1'$ Sauerstoff ist und —$R_2'$— ein Rest XXI

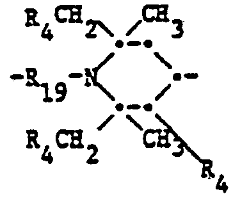

(XXI)

ist, in dem $R_4$ H ist und $R_{19}$ Aethylen, 2-Methyläthylen, 2-Aethyläthylen, 2-Phenyläthylen, 2-Butenylen oder p-Phenylendimethylen ist, und E H oder $C_{1-6}$ Alkoxy ist, und insbesondere Pyrrolidone der Formel III, worin $R_1'$ Sauerstoff und $R_2'$ 1,3-Propylen ist, das in 2-Stellung einen Rest XIII gemäss Anspruch 2 trägt, in dem p Null ist, $R_4$ H ist, und $R_{16}$ H, Methyl oder Benzyl ist, und E H oder $C_{1-6}$ Alkoxy ist.

Die erfindungsgemässen Pyrrolidone können nach einem überraschend günstig verlaufenden Verfahren erhalten werden.

Gemäss dem eingangs zitierten Stand der Technik, so der US-PS 2.993.021, wird Itaconsäurediester mit einem Diamin umgesetzt, wobei unter Bildung von Pyrrolidonen Alkohol freigesetzt wird (vgl. Sp. 3, Z.

40-70). Aehnlich beschreibt die DE-OS 2 721 626 die Umsetzung von z. B. Itaconsäure mit einem Polyoxyalkylendiamin unter Ringschlussbedingungen zu Pyrrolidonen.

Die Uebertragung dieser Reaktion auf Amine, die einen Piperidinylrest tragen, war jedoch für den Fachmann nicht ohne weiteres gegeben, da zweifelhaft sein musste, ob ein 2,2,6,6-Tetraalkylpiperidin überhaupt die erforderlichen Ringschlussbedingungen aushalten würde. Es zeigte sich aber, dass diese Reaktion im Fall der erfindungsgemässen Pyrrolidone zu ausserordentlich günstigen Resultaten führt, was nicht vorhergesehen werden konnte. Ausbeute und Reinheit der Produkte sind überraschend gut, die Verfahrensführung einfach.

Demgemäss betrifft die Erfindung auch ein Verfahren zur Herstellung von Pyrrolidonen der Formel I, dadurch gekennzeichnet, dass man Itaconsäure oder einen Ester davon mit einem Amin XXIII

$R_2-NH_2$ + 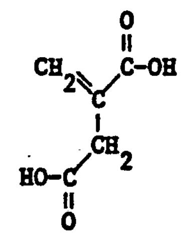

(XXIII)

unter Ringschlussbedingungen umsetzt, und, wenn erwünscht, in so erhaltenen Pyrrolidonen der Formel I die veresterte oder freie Hydroxygruppe $R_1$ umestert bzw. verestert, verseift oder amidiert, oder ein Salz davon bildet.

Die Umsetzung kann in einem inerten Lösungsmittel durchgeführt werden, wie einem Kohlenwasserstoff, z. B. Toluol oder Xylol, oder auch Wasser, kann aber mit Vorteil auch ohne ein Lösungsmittel durchgeführt werden. Die Temperatur ist bevorzugt erhöht, etwa 40-200°, insbesondere 60-140°. Die Reaktionszeit beträgt mehrere Stunden, insbesondere 2-24 Stunden. Bevorzugt wird in einer Inertgasatmosphäre gearbeitet, z. B. unter Stickstoff. Entstehendes Wasser bzw. Alkohol wird vorteilhaft aus dem Reaktionsgemisch entfernt, insbesondere abdestilliert.

So bildet eine freie Hydroxylgruppe $R_1$ zusammen mit der Carbonylgruppe eine freie Carboxylgruppe, die z. B. zunächst in eine Säurechloridgruppe-COCl überführt werden kann, etwa mit Thionylchlorid in Methanol, die dann durch Alkoholyse in die entsprechende Estergruppe umgewandelt werden kann, z. B. mit Methanol in eine Methoxycarbonylgruppe.

In so erhaltenen Pyrrolidonen kann man in an sich bekannter Weise, wenn erwünscht, einzelne Substituenten abwandeln, insbesondere kann man eine Hydroxygruppe $R_1$ in ein Salz überführen, z. B. durch Umsetzung mit einem Metallhydroxid oder -oxid, oder verestern, z. B. mit einem Halogenid Hal-$R_1$, etwa einem Alkylbromid, Alkenylbromid oder Benzylchlorid, bevorzugt in Gegenwart einer Base, wie Kaliumcarbonat. Dabei kann eine NH-Gruppe im Piperidinylrest zugleich substituiert werden. Die Veresterung kann auch mit einem Epoxid erfolgen, wobei man Ester mit OH vowiegend in β-Stellung im Rest $R_1$ erhält. In so erhaltenen Pyrrolidonen mit einer veresterten Hydroxygruppe $R_1$, z. B. einem Alkoxyrest $R_1$ wie Methoxy, kann man diese zu einer anderen veresterten Hydroxygruppe $R_1$ umestern, insbesondere in Gegenwart eines basischen Katalysators, wie Alkaliamid, z. B. Lithiumamid und/oder Aluminiumalkoxid, z. B. Aluminiumisopropoxid, ferner auch mit Tetraalkyl-orthotitanaten und gegebenenfalls in Gegenwart eines inerten Lösungsmittels, wie einem Kohlenwasserstoff, z. B. Toluol oder Xylol. Alkoxy $R_1$ kann aber auch in Amino übergeführt werden, wie durch Umsetzung mit Ammoniak oder einem Amin, gegebenenfalls in Gegenwart einer Base und unter erhöhter Temperatur, vorzugsweise unter Abdestillieren des Alkanols. Hydroxy $R_1$ kann ebenfalls in Amino überführt werden, z. B. durch Umsetzung mit einem Amin unter erhöhter Temperatur und Abdestillieren des Reaktionswassers. Auch Chlor $R_1$ kann in Amino überführt werden, wie durch Umsetzung mit einem Amin, gegebenenfalls zusammen mit einer Hilfsbase unter Bindung des entstehenden HCl. Gleiches gilt für die Umsetzung mit Di- oder Polyaminen. Erhaltene Pyrrolidone mit einer NH-Gruppe im Piperidinylrest können an diesem N-Atom substituiert werden, z. B. durch Oxidation mit Persäuren und dergleichen zu den N-Oxylen, durch Umsetzung mit Epoxiden zu β-Hydroxy-Derivaten, durch Acylierung z. B. mit Säureanhydriden oder Säurehalogeniden zu Acylderivaten, durch Alkylieren oder Benzylieren zu den N-Alkyl-, N-Benzyl-Derivaten oder durch Umsetzung mit Isocyanaten zu Harnstoff-Derivaten. Verwendet man in diesen Umsetzungen Reaktanten mit mehreren funktionellen Gruppen, so erhält man entsprechende Pyrrolidone, in denen z. B. n 2, 3 oder 4 ist oder m 2 ist. So kann man z. B. Diole, Dihalogenide, Diamine, Diepoxide, Diisocyante, Triole, Triamine, Triepoxide oder Tetrole verwenden und damit erhaltene Pyrrolidone in andere umwandeln. Man kann aber insbesondere z. B. Di- oder Triamine direkt für die Herstellung der Pyrrolidone selbst einsetzen und erhält dann entsprechend Pyrrolidone der Formel I mit 2 oder 3 Pyrrolidonresten im Molekül.

Oligo- bzw. polymere Pyrrolidone erhält man insbesondere, indem man ein Pyrrolidon mit einem Alkoxyrest $R_1$, z. B. Methoxy, und einem Hydroxyalkylrest als N-Substituenten des Piperidinylrestes, z. B. β-Hydroxyäthyl, in Gegenwart eines basischen Katalysators und bei erhöhter Temperatur umsetzt,

insbesondere in einem inerten Lösungsmittel, wie Toluol oder Xylol, wobei das Alkanol, z. B. Methanol bevorzugt abdestilliert wird. Man kann aber auch ein Pyrrolidon mit $R_1$ gleich OH und NH-Gruppe im Piperidinylrest mit einer zweiwertigen geeigneten Verbindung umsetzen, wie einem Dihalogenalkan oder p-Phenylendimethylenhalogenid, wie Bromid oder Chlorid, insbesondere in Gegenwart einer Base, z. B. Kaliumcarbonat, in einem Lösungsmittel, wie einem Keton, z. B. Methyläthylketon oder Cyclohexanon und bei erhöhter Temperatur, wobei als Katalysator z. B. Kaliumjodid verwendet werden kann. Ebenso kann man Pyrrolidone mit zwei Piperidinylresten, in denen das N-Atom unsubstituiert ist, mit Diisocyanaten, wie p-Phenylendiisocyanat oder dessen 2-Methyl-derivat, umsetzen, wobei in üblicher Weise Polyharnstoffe erhalten werden. Solche letztgenannten Pyrrolidone mit 2 Piperidinyl-Resten können aber auch, wie beschrieben, mit difunktionellen Alkylierungsmitteln umgesetzt werden, wie mit einem Dihalogenalkan oder p-Phenylen-dimethylen-halogenid, insbesondere in Gegenwart einer Base, wie Kaliumcarbonat und einem inerten Lösungsmittel, wie Methyläthylketon, Cyclohexanon oder Dimethylformamid.

Die verwendeten Ausgangsstoffe sind bekannt oder können, sofern einzelne von ihnen noch neu sein sollten, in Analogie zu bekannten hergestellt werden. Amine der Formel XXIII sind beispielsweise bekannt aus US-PS 3.684.765, US-PS 3.639.409, US-PS 3.937.711 und GB-PS 1.492.494.

Die Verbindungen der Formel I können gemäss der Erfindung als Stabilisatoren für Kunststoffe gegen deren Schädigung durch Einwirkung von Sauerstoff, Wärme und Licht verwendet werden.

Lichtempfindliche Materialien sind beispielsweise Fette und Oele, photographische Filme und Papiere, kosmetische Grundstoffe, insbesondere jedoch Kunststoffe und Lacke. Polymere, die Basis für solche Kunststoffe und Lacke sein können, sind die folgenden :

1. Polymere von Mono- und Diolefinen, beispielsweise Polyäthylen (das gegebenenfalls vernetzt sein kann, Polypropylen, Polyisobutylen, Polymethylbuten-1, Polymethylpenten-1, Polyisopren oder Polybutadien.

2. Mischungen der unter 1) genannten Polymeren, z. B. Mischungen von Polypropylen mit Polyäthylen oder mit Polyisobutylen.

3. Copolymere von Mono- und Diolefinen, wie z. B. Aethylen-Propylen-Copolymere, Propylen-Buten-1-Copolymere, Propylen-Isobutylen-Copolymere, Aethylen-Buten-1-Copolymere sowie Terpolymere von Aethylen mit Propylen und einem Dien, wie Hexadien, Dicyclopentadien oder Aethylidennorbonen.

4. Polystyrol.

5. Copolymere von Styrol oder α-Methylstyrol mit Dienen oder Acrylderivaten, wie z. B. Styrol-Butadien, Styrol-Acrylnitril, Styrol-Acrylnitril-Methylacrylat ; Mischungen von hoher Schlagzähigkeit aus Styrol-Copolymeren und einem anderen Polymer wie z. B. einem Polyacrylat, einem Dien-Polymeren oder einem Aethylen-Propylen-Dien-Terpolymeren ; sowie Block-Copolymere des Styrols, wie z. B. Styrolbutadien-Styrol, Styrol-Isopren-Styrol oder Styrol-Aethylen/Butylen-Styrol.

6. Graft- oder Pfropfcopolymere von Styrol, wie z. B. Styrol auf Polybutadien, Styrol und Acrylnitril auf Polybutadien sowie deren Mischungen mit den unter 5) genannten Copolymeren, wie sie als sogenannte ABS-Polymere bekannt sind.

7. Halogenhaltige Polymere, wie z. B. Polyvinylchlorid, Polyvinylidenchlorid, Polyvinylfluorid, Polychloropren, Chlorkautschuke und Copolymere wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitril.

9. Polymere, die sich von ungesättigten Alkoholen und Aminen bzw. deren Acrylderivaten oder Acetalen ableiten, wie Polyvinylalkohol, Polyvinylacetat-, -stearat, -benzoat, -maleat, Polyvinylbutyral, Polyallylphthalat, Polyallylmelamin und deren Copolymere mit anderen Vinylverbindungen, wie Aethylen/Vinylacetat-Copolymere.

10. Homo- und Copolymere von Epoxyden, wie Polyäthylenoxyd, Polypropylenoxyd oder deren Copolymere mit Bisglycidyläthern.

11. Polyacetale, wie Polyoxymethylen, sowie solche Polyoxymethylene, die als Comonomeres Aethylenoxyd enthalten.

12. Polyphenylenoxyde.

13. Polyurethane und Polyharnstoffe.

14. Polycarbonate.

15. Polysulfone.

16. Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.

17. Polyester, die sich von Dicarbonsäuren und Dialkoholen und/oder von Hydroxycarbonsäuren oder den entsprechenden Lactonen ableiten, wie Polyäthylenterephthalat, Polybutylenterephthalat, Poly-1,4-dimethylol-cyclohexanterephthalat, sowie Block-Polyäther-ester, die sich von Polyäthern mit Hydroxylengruppen und Dicarbonsäuren ableiten.

18. Vernetzte Polymerisate, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.

19. Alkydharze, wie Glycerin-Phthalsäure-Harze und deren Gemische mit Melamin-Formaldehydharzen.

20. Ungesättigte Polyesterharze, die sich von Copolyestern gesättigter- und ungesättigter Dicarbonsäuren mit mehrwertigen Alkoholen, sowie Vinylverbindungen als Vernetzungsmitteln ableiten, wie auch deren halogenhaltige, schwerbrennbare Modifikationen.

21. Vernetzte Epoxidharze, die sich von Polyepoxiden ableiten, z. B. von Bis-glycidyläthern oder von cycloaliphatischen Diepoxiden.

22. Natürliche Polymere, wie Cellulose, Gummi, sowie deren polymerhomolog chemisch abgewandelte Derivate, wie Cellulose-acetate, -propionate und -butyrate, bzw. die Celluloseäther, wie Methylcellulose.

Von diesen Polymeren sind die Gruppen 1-6, 13, 16 und 17 hervorzuheben, da in diesen Substraten die erfindungsgemässen Stabilisatoren eine besonders markante Wirkung haben. Ausserdem sind Polymere, die als Lackharze verwendet werden, von besonderer Bedeutung.

Die Stabilisatoren der Formel I werden den Substraten in einer Konzentration von 0,01 bis 5 Gew.-%, vorzugsweise 0,1 bis 1 Gew.-%, berechnet auf das zu stabilisierende Material, einverleibt.

Die Einarbeitung kann beispielsweise durch Einmischen mindestens eines der erfindungsgemässen Lichtschutzmittel und gegebenenfalls weiterer Additive nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels erfolgen.

Der so stabilisierte Kunststoff kann ausserdem noch andere Stabilisatoren oder sonstige in der Kunststofftechnologie übliche Zusätze enthalten, wie die beispielsweise in der DT-OS 2 349 962, Seite 25-32, aufgeführt sind.

Bei der Mitverwendung bekannter Stabilisatoren können synergistische Effekte auftreten, was besonders bei Mitverwendung von anderen Lichtschutzmitteln oder von organischen Phosphiten häufig der Fall ist.

Von besonderer Bedeutung ist die Mitverwendung von Antioxydantien bei der Stabilisierung von Polyolefinen.

Die Erfindung betrifft daher auch die durch Zusatz von 0,01 bis 5 Gew.-% einer Verbindung der Formel I stabilisierten Kunststoffe, die gegebenenfalls noch andere bekannte und übliche Zusätze enthalten können. Die so stabilisierten Kunststoffe können in verschiedenster Form angewendet werden z. B. als Folien, Fasern, Bändchen, Profile oder als Bindemittel für Lacke, Klebemittel oder Kitte.

Von besonderer Bedeutung ist die Anwendung in dünnen Schichten wie in Form von Fasern, Folien und Lacken.

Die Herstellung und Verwendung der erfindungsgemässen Verbindungen wird in den folgenden Beispielen näher beschrieben. Teile bedeuten darin Gewichtsteile und % Gewichtsprozente. Die Temperaturen sind in Celsius-Graden angegeben.

## Beispiel 1

68,2 g 1,2,2,6,6-Pentamethyl-4-aminopiperidin und 83,2 g Itaconsäuredimethylester (95 %ig) werden in einem Sulfierkolben mit Rückflusskühler zusammengegeben und unter Stickstoff 19 Std. bei 80° gerührt. Hierauf wird der Rückflusskühler entfernt und durch einen absteigenden Liebig-Kühler ersetzt. Die Innentemperatur wird langsam bis auf 100° gesteigert, wobei das abgespaltene Methanol im schwachen $N_2$-Strom während ca. 5 Stunden ausdestilliert wird. Das heisse Reaktionsgemisch wird nun mit warmen Ligroin (Siedepunkt 110-140°) versetzt und klar filtriert. Aus der Lösung kristallisiert beim Abkühlen das 1,2,2,6,6-Pentamethyl-4-(4-methoxycarbonyl-2-pyrrolidonyl-1)-piperidin aus. Es wird abfiltriert und nochmals in Ligroin (Siedepunkt 110-140°) umkristallisiert, wodurch farblose Kristalle vom F. : 117-118° erhalten werden.

## Beispiel 2

Analog dem Beispiel 1 wird aus 2,2,6,6-Tetramethyl-4-aminopiperidin und Itaconsäuredimethylester das 2,2,6,6-Tetramethyl-4-(4-methoxycarbonyl-2-pyrrolidonyl-1)-piperidin erhalten. F. : 127-128°.

## Beispiel 3

Zu 65,1 g Itaconsäure lässt man unter Rühren bei Raumtemperatur die Lösung von 85,2 g 1,2,2,6,6-Pentamethyl-4-aminopiperidin in 80 ml Wasser in ca. 5 Minuten zufliessen, wobei die Temperatur auf ca. 75° ansteigt. Hierauf wurde auf Rückflusstemperatur erhitzt und insgesamt 60 Stunden bei dieser Temperatur gerührt. Das auf Raumtemperatur abgekühlte Reaktionsgemisch wird hierauf langsam bei Raumtemperatur und unter kräftigem Turbinieren in 600 ml Aceton eingegossen, wobei das 1,2,2,6,6-Pentamethyl-4-(4-carboxy-2-pyrrolidonyl-1)-piperidin alsbald als feinkristallines Pulver ausfällt. Die Verbindung wird noch während 30 Minuten weiter turbiniert, hierauf abfiltriert und im Vakuum bei 80° getrocknet. F. : 248-250° (Zersetzung ; Bestimmung auf Kofler-Bank).

$C_{15}H_{26}N_2O_3$
berechnet : C 63,80 % H 9,28 % N 9,92 %
gefunden : C 63,6 % H 9,2 % N 10,1 %

Eine Probe des so erhaltenen 1,2,2,6,6-Pentamethyl-4-(4-carboxy-2-pyrrolidonyl-1)-piperidins wurde in Diäthyläther mit Diazomethan umgesetzt, wobei die « Aminosäure » unter Veresterung langsam in Lösung geht. Das so erhaltene 1,2,2,6,6-Pentamethyl-4-(4-methoxycarbonyl-2-pyrrolidonyl-1)-piperidin ist mit der nach Beispiel 1 hergestellten Verbindung in allen Eigenschaften identisch. F. : 116-118°.

## Beispiel 4

Analog dem Beispiel 3 wird aus Itaconsäure und 2,2,6,6-Tetramethyl-4-aminopiperidin das 2,2,6,6-Tetramethyl-4-(4-carboxy-2-pyrrolidonyl-1)-piperidin erhalten. F. : ca. 260° (Zersetzung)

$C_4H_{24}N_2O_3$
berechnet : C 62,66 % H 9,01 % N 10,44 %
gefunden : C 62,9 % H 9,0 % N 10,7 %

## Beispiel 5

Zu einer Suspension von 22,6 g 1,2,2,6,6-Pentamethyl-4-(4-carboxy-2-pyrrolidonyl-1)-piperidin und 15,2 g wasserfreiem Kaliumcarbonat in 80 ml Aethylmethylketon tropft man unter Rühren (unter $N_2$) bei 75° in ca 1/4 Stunde 12,1 g Allylbromid. Anschliessend wird für weitere 20 Stunden bei Rückflusstemperatur gerührt.

Zur Aufarbeitung wird das noch warme Reaktionsgemisch abfiltriert, mit Dichlormethan nachgewaschen, die vereinigten organischen Filtrate im Wasserstrahlvakuum vollständig vom Lösungsmittel befreit und das Rohprodukt im Kugelrohr destilliert : Siedepunkt 190°/0,01 Torr.

Das Destillat, welches in der Kälte alsbald kristallin erstarrt, wird in n-Hexan umkristallisiert, wodurch reines 1,2,2,6,6-Pentamethyl-4-(4-allyloxycarbonyl-2-pyrrolidonyl-1)-piperidin vom F. 48-49° erhalten wird.

$C_{18}H_{30}N_2O_3$
berechnet : C 67,05 % H 9,38 % N 8,69 %
gefunden : C 66,9 % H 9,3 % N 8,8 %

## Beispiel 6

Eine auf 125° erhitzte Lösung von 29,6 g 1,2,2,6,6-Pentamethyl-4-(4-methoxycarbonyl-2-pyrrolidonyl-1)-piperidin und 18,3 g 1,4-Bis-(2,2,6,6-tetramethyl-4-hydroxy-piperidinyl-1)-2-buten in 300 ml wasserfreiem Xylol (Isomerengemisch) wird unter Rühren mit 0,1 g Lithiumamid und 0,1 g Aluminiumisopropoxid versetzt. Hierauf wird das Reaktionsgemisch unter gleichzeitigem Durchleiten eines schwachen Stickstoffstroms innerhalb von 4 Stunden bis auf ca. 138° erhitzt und gleichzeitig durch einen absteigenden Kühler das freigesetzte Methanol sowie auch Xylol langsam ausdestilliert. Die Innentemperatur wird nun langsam bis auf ca. 160° gesteigert und das Xylol weitgehend ausdestilliert (Dauer ca. 4 Stunden, gesamte Reaktionszeit ca. 8 Stunden). Nach dem Abkühlen wird das Reaktionsgemisch in Methylenchlorid aufgenommen, zweimal mit wenig 0,1 N Essigsäure und zweimal mit Wasser gewaschen, über Natriumsulfat getrocknet, filtriert und im Wasserstrahlvakuum vollständig eingedampft. Das vorerst harzartige Rohprodukt wird erneut in 50 ml Methylenchlorid aufgenommen und bei Raumtemperatur unter Rühren in 500 ml Diäthyläther eingegossen. Aus der vorerst klaren Lösung kristallisiert in ca. 2 Stunden das Diastereoisomerengemisch der Verbindung

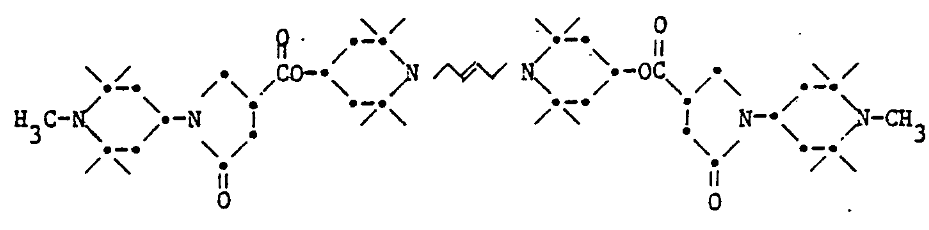

als praktisch farbloses Kristallpulver aus. Es wird abfiltriert und getrocknet. F. : ~ 121-123° (Diastereoisomerengemisch).

Eine aus Aceton umkristallisierte Probe schmilzt bei 123-126°. Das $^1H$-NMR-Spektrum ist mit der oben genannten Struktur gut verträglich (Diastereoisomerengemisch).

## Beispiel 7

92,2 g 2-(2,2,6,6-Tetramethylpiperidinyl)-äthylamin (Kp 50°/0,005 Torr, $n_D^{20}$ : 1,474 9) und 83,2 g

Itaconsäuredimethylester (ca. 95 %ig) werden analog dem Beispiel 1 20 Stunden bei 85° gerührt, hierauf während ca. 4 Stunden das abgespaltene Methanol ausdestilliert und die Temperatur bis 100° gesteigert.

Zur Aufarbeitung wird das Reaktionsgemisch erst am Hochvakuum vollständig entgast, von leichtflüchtigen Anteilen befreit und hierauf der Kurzwegdestillation unterworfen. Siedepunkt: ca. 170°/0,01 Torr. Das vorerst flüssige Destillat, das 2,2,6,6-Tetramethyl-4-[2-(4-methoxycarbonyl-2-pyrrolidonyl-1)-äthyl]-piperidin, erstarrt nach kurzer Zeit kristallin und wird in n-Pentan umkristallisiert. F.: 50-52°.

## Beispiel 8

Analog dem Beispiel 6 wird aus 1,2,2,6,6-Pentamethyl-4-(4-methoxycarbonyl-2-pyrrolidonyl-1)-piperidin und α-α-Bis-(4-hydroxy-2,2,6,6-tetramethylpiperidyl-1)-p-xylol (Smp. 247-249°) durch Umesterung das amorphe Diastereoisomerengemisch der Verbindung

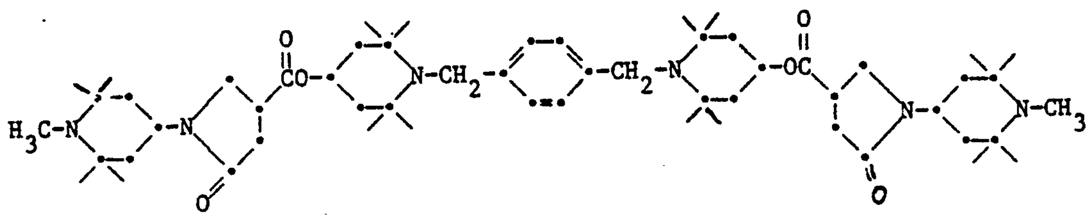

hergestellt. Erweichungspunkt ca. 75°.

## Beispiel 9

Eine Lösung von 59 g (0,2 Mol) 1,2,2,6,6-Pentamethyl-4-(4-methoxycarbonyl-pyrrolidonyl-1)-piperidin, 34,3 g (0,2 Mol) 4-Hydroxy-1,2,2,6,6-pentamethylpiperidin und 0,3 ml Tetrabutyl-orthotitanat werden in 350 ml Xylol im schwachen Stickstoffstrom innerhalb von 2 Std. auf ca. 135° erhitzt, wobei durch den absteigenden Kühler abgespaltenes Methanol und Xylol langsam ausdestillieren. Während 9 Std. wird die Innentemperatur nun langsam bis auf ca. 155° gesteigert, wobei das Xylol praktisch vollständig ausdestilliert. Der viskose Rückstand wird nach dem Abkühlen auf ca. 50° in 300 ml n-Hexan warm gelöst, mit 9 g Kieselgel 60 (Merck: 0,063-0,200 mm) 30 Min. verrührt, filtriert und das Lösungsmittel abdestilliert. Die nach kurzer Zeit kristallin erstarrende Verbindung wird in n-Hexan umkristallisiert, wodurch reines, farbloses 1,2,2,6,6-Pentamethyl-4-[4-(1,2,2,6,6-pentamethylpiperidinyl-4-oxycarbonyl)-2-pyrrolidonyl-1]-piperidin der Formel

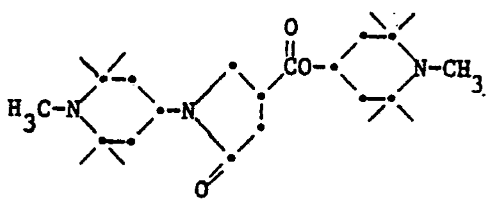

vom Smp. 89-90° erhalten wird.

$C_{25}H_{45}N_3O_3$ (435,6)

| | | | |
|---|---|---|---|
| berechnet: | C 68,92 % | H 10,41 % | N 9,65 % |
| gefunden: | C 69,2 % | H 10,4 % | N 9,7 % |

## Beispiel 10

Analog Beispiel 9 wird aus 1,2,2,6,6-Pentamethyl-4-(4-methoxycarbonyl-2-pyrrolidonyl-1)-piperidin und 1,4-Bishydroxymethyl-benzol durch Umesterung die Verbindung

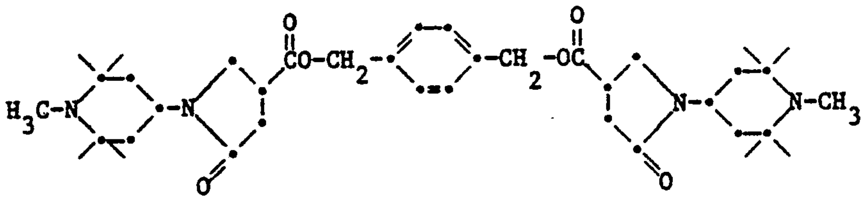

Als Diastereoisomerengemisch vom Smp. 155-160° hergestellt.

$C_{38}H_{58}N_4O_6$ (666,9)

| | | | |
|---|---|---|---|
| berechnet: | C 68,44 % | H 8,77 % | N 8,40 % |
| gefunden: | C 68,5 % | H 8,9 % | N 8,7 % |

Beispiel 11

Analog Beispiel 9 wird aus 1,2,2,6,6-Pentamethyl-4-(4-methoxycarbonyl-2-pyrrolidonyl-1)-piperidin und 1,8-Octandiol durch Umesterung die Verbindung

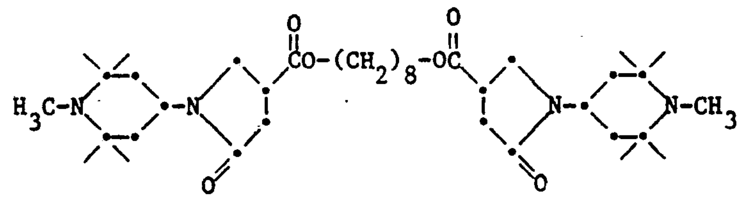

als Diastereoisomerengemisch vom Smp. 92-98° hergestellt.

$C_{38}H_{66}N_4O_6$ (674,97)

| | | | |
|---|---|---|---|
| berechnet : | C 67,62 % | H 9,86 % | N 8,30 % |
| gefunden : | C 67,3 % | H 10,0 % | N 8,3 % |

Beispiel 12

Analog Beispiel 9 wird aus 1-Benzyl-2,2,6,6-tetramethyl-4-(4-methoxycarbonyl-2-pyrrolidonyl-1)-piperidin (vgl. Beispiel 25) und 1,8-Octandiol durch Umesterung und anschliessende säulenchromatische Reinigung (Eluierungsmittel : Diethyläther-Methanol 98 : 2) an Kieselgel 60 (0,063-0,200 mm ; Merck) die Verbindung

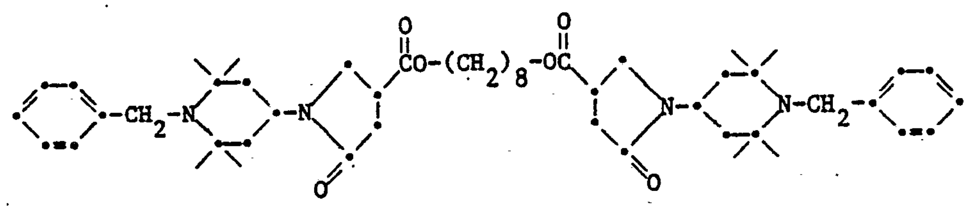

als Diastereoisomerengemisch mit dem Erweichungspunkt von ca. ~ 70° hergestellt.

$C_{50}H_{74}N_4O_6$ (827,12)

| | | | |
|---|---|---|---|
| berechnet : | C 72,61 % | H 9,02 % | N 6,77 % |
| gefunden : | C 72,8 % | H 8,9 % | N 7,0 % |

Beispiel 13

Eine Schmelze aus 59,2 g (0,2 Mol) 1,2,2,6,6-Pentamethyl-4-(4-methoxycarbonyl-2-pyrrolidonyl-1)-piperidin (gemäss Beispiel 1), 11,6 g (0,1 Mol) 1,6-Diaminohexan und 50 mg Natriummethoxid wird unter Rühren im leichten Stickstoffstrom während 18 Std. auf 140-145° erhitzt, wobei das abgespaltene Methanol kontinuierlich aus dem Reaktionsgemisch ausdestilliert wird.

Zur Aufarbeitung wird die viskose Schmelze auf 60° gekühlt, in Chloroform gelöst, klar filtriert und das Filtrat im Vakuum vollständig vom Lösungsmittel befreit. Anschliessend wird die rohe Verbindung durch Säulenchromatographie an Kieselgel 60 (0,063-0,200 mm ; Merck) weiter gereinigt (Eluierungsmittel : Diethyläther/Methanol/Triethylamin im Volumenverhältnis 70 : 25 : 5), wodurch die Verbindung der Struktur

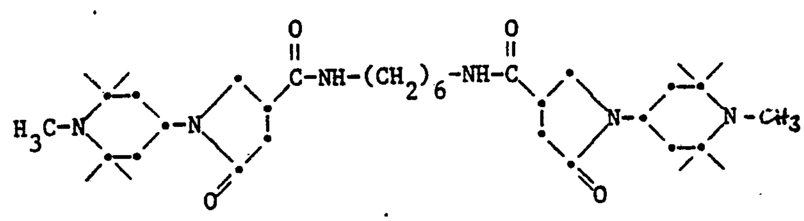

als Diastereoisomerengemisch (amorph) isoliert wird. Erweichungspunkt ca. 100° (Kofler-Bank).

$C_{36}H_{64}N_6O_4$ (644,9)

| | | | |
|---|---|---|---|
| berechnet : | C 67,04 % | H 10,00 % | N 13,03 % |
| gefunden : | C 67,2 % | H 10,0 % | N 12,8 % |

Das $^1$H-NMR-Spektrum (100 MHz) ist mit der oben angegebenen Struktur gut verträglich und zeigt, dass es sich um das Diastereoisomerengemisch der Verbindung handelt.

Beispiel 14

Analog dem Beispiel 13 wird aus 1,2,2,6,6-Pentamethyl-4-(4-methoxycarbonyl-2-pyrrolidonyl-1)-piperidin (gemäss Beispiel 1) und 4-Amino-2,2,6,6-tetramethylpiperidin die Verbindung

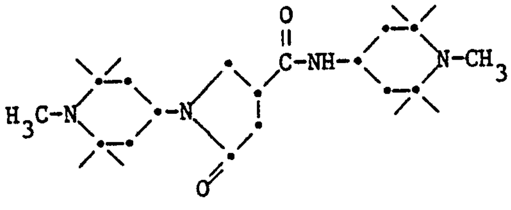

vom Smp. 159-161° (aus Acetonitril) hergestellt.

$C_{25}H_{46}N_4O_2$ (434,67)

| | | | |
|---|---|---|---|
| berechnet : | C 69,08 % | H 10,67 % | N 12,89 % |
| gefunden : | C 69,0 % | H 10,7 % | N 12,9 % |

Beispiel 15

Analog Beispiel 13 wird aus 1-Allyl-2,2,6,6-tetramethyl-4-(4-methoxycarbonyl-2-pyrrolidonyl-1)-piperidin (gemäss Beispiel 23) und 1,3-Diaminopropan und anschliessender säulenchromatographischer Reinigung (Kieselgel 60/0,063-0,200 mm ; Merck mit dem Eluierungsmittel Diethyläther-Methanol 75 : 25) das Diastereoisomerengemisch der Verbindung

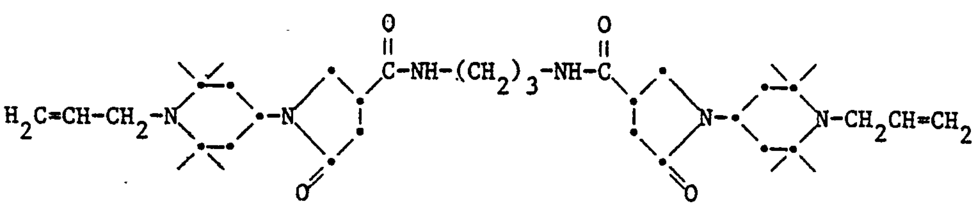

hergestellt und isoliert. Erweichungspunkt : ca. 100° (Kofler-Bank). Das $^{13}C$-NMR-Spektrum (90,52 MHz) ist mit der genannten Struktur (Diastereoisomerengemisch ca. 1 : 1) gut verträglich.

$C_{37}H_{62}N_6O_4$ (654,96)

| | | | |
|---|---|---|---|
| berechnet : | C 67,85 % | H 9,54 % | N 12,83 % |
| gefunden : | C 67,5 % | H 9,4 % | N 12,7 % |

Beispiel 16

Analog Beispiel 13 wird aus 1,2,2,6,6-Pentamethyl-4-(4-methoxycarbonyl-2-pyrrolidonyl-1)-piperidin und Phenylhydrazin die Verbindung

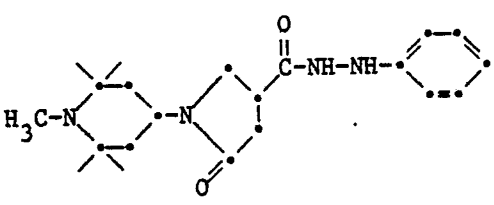

hergestellt. Smp. 241-243° (aus Isopropanol).

$C_{21}H_{32}N_4O_2$ (372,51)

| | | | |
|---|---|---|---|
| berechnet : | C 67,71 % | H 8,66 % | N 15,04 % |
| gefunden : | C 68,0 % | H 8,8 % | N 15,1 % |

Beispiel 17

Eine Lösung von 35,5 g (0,12 Mol) 1,2,2,6,6-Pentamethyl-4-(4-methoxycarbonyl-2-pyrrolidonyl-1)-piperidin, 4,1 g Pentaerythrit (0,03 Mol), 100 mg Lithiumamid und 200 mg Aluminiumisopropoxid werden im 350 ml Xylol (Isomerengemisch) im schwachen Stickstoffstrom langsam auf ca. 135° erhitzt, wobei durch den absteigenden Kühler das abgespaltene Methanol sowie Xylol kontinuierlich ausdestillieren. Die Innentemperatur wird allmählich bis auf ca. 150° gesteigert und 24 Std. so belassen, wodurch das Xylol vollständig ausdestilliert wird und praktisch quantitative Umesterung erfolgt.

Der viskose Rückstand wird nach dem Abkühlen in Hexan-Dichlormethan (2 : 1) gelöst, mit 10 g Kieselgel 60 (0,063-0,200 mm ; Merck) 30 Min. verrührt und klar filtriert. Das Filtrat wird wiederholt mit je 100 ml kaltem Wasser gewaschen, über Natriumsulfat getrocknet, das Lösungsmittel abdestilliert und das Pentaerythrit-tetra-[1-(1,2,2,6,6-pentamethyl-4-piperidinyl)-2-pyrrolidon-4-carboxylat] der Formel

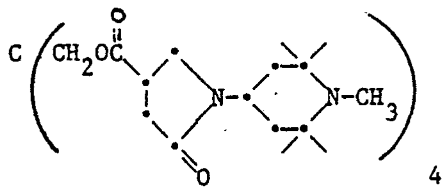

im Hochvakuum getrocknet. Das amorphe Diastereoisomerengemisch besitzt einen Erweichungspunkt von ca. 95° (Kofler-Bank). Das $^1$H-NMR-Spektrum (100 MHz) ist mit der oben angegebenen Struktur (Isomerengemisch) gut verträglich.

$C_{65}H_{108}N_8O_{12}$ (1 193,55)

| | | | |
|---|---|---|---|
| berechnet : | C 65,41 % | H 9,12 % | N 9,39 % |
| gefunden : | C 65,6 % | H 8,8 % | N 9,4 % |

Beispiel 18

Analog Beispiel 17 wurde aus 1,2,2,6,6-Pentamethyl-4-(4-methoxycarbonyl-2-pyrrolidonyl-1)-piperidin und 1,1,1-Trishydroxymethylpropan das Isomerengemisch der Verbindung

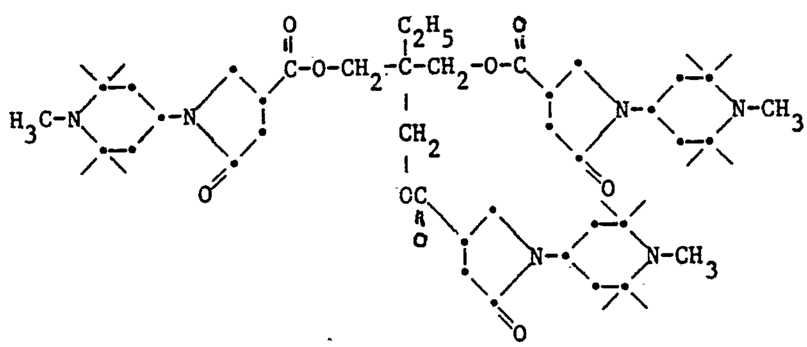

hergestellt. Erweichungspunkt ca. 70° (Kofler-Bank).

$C_{51}H_{86}N_6O_4$ (926,22)

| | | | |
|---|---|---|---|
| berechnet : | C 66,06 % | H 9,35 % | N 9,06 % |
| gefunden : | C 66,5 % | H 9,5 % | N 8,8 % |

Das $^1$H-NMR-Spektrum ist mit der genannten Struktur gut verträglich.

Beispiel 19

Oligomere Verbindung der wiederkehrenden Struktureinheit

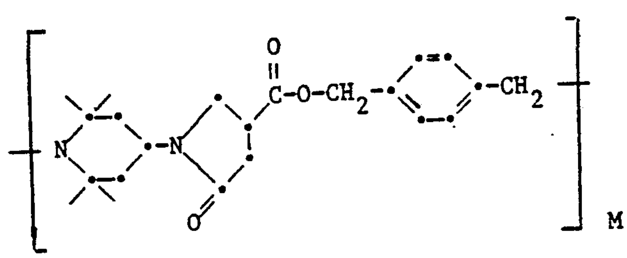

Ein Reaktionsgemisch aus 21,8 g (0,08 Mol) 2,2,6,6-Tetramethyl-4-(4-carboxy-2-pyrrolidonyl-1)-piperidin, 21,1 g (0,08 Mol) α,α-Dibrom-p-xylol, 24,8 g (0,18 Mol) fein pulverisiertem Kaliumcarbonat, 0,2 g pulverisiertem Kaliumjodid und 70 ml 2-Butanon wird 48 Std. bei Rückflusstemperatur unter einer Stickstoffatmosphäre kräftig gerührt. Das nunmehr viskoser gewordene Reaktionsgemisch wird warm filtriert, das Filtrat im Vakuum eingedampft, der Rückstand in Dichlormethan gelöst, durch eine Schicht Hyflo klar filtriert und durch langsames Eingiessen der Dichlormethanlösung unter kräftigem Turbinieren in 500 ml Acetonitril die polymere Verbindung der oben angegebenen Struktur gefällt. Durch Umfällen

und Trocknen im Hochvakuum wurde ein Polymeres vom Erweichungspunkt 190° (Kofler-Bank) und einem mittleren Molekulargewicht ($M_n$) von 14'900 erhalten.

Das $^1$H-NMR-Spektrum steht mit der oben angegebenen Struktur gut in Einklang.

$(C_{22}H_{30}N_2O_3)_n$ (370,5)
berechnet : N 7,56 %
gefunden : N 7,2 %

Beispiel 20

Die oligomere Verbindung mit der wiederkehrenden Struktureinheit

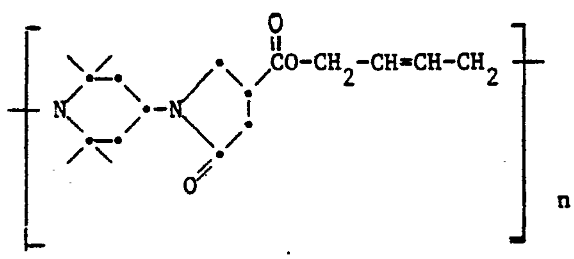

wird analog dem Beispiel 19 aus 2,2,6,6-Tetramethyl-4-(4-carboxy-2-pyrrolidonyl-1)-piperidin und 1,4-Dichlor-2-buten hergestellt, wobei nach der Fällung in Hexan ein Oligomeres mit dem Erweichungspunkt von ca. 105° (Kofler-Bank) und einem mittleren Molekulargewicht ($M_n$) von 1'400 (Dampfdruckosmometer) erhalten wurde.

$(C_{18}H_{28}N_2O_3)_n$ $(320,4)_n$
berechnet : N 8,75 %
gefunden : N 8,42 %

Beispiel 21

Nickelsalz des 1,2,2,6,6-Pentamethyl-4-(4-carboxy-2-pyrrolidonyl-1)-piperidins

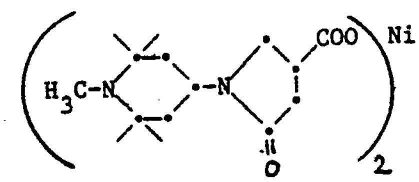

Zu einer Lösung von 28,2 g (0,1 Mol) 1,2,2,6,6-Pentamethyl-4-(4-carboxy-2-pyrrolidonyl-1)-piperidin in 80 ml absolutem Methanol tropft man unter Feuchtigskeitsausschluss innerhalb einer Stunde bei Raumtemperatur die frisch bereitete Lösung von 2,3 g (0,1 Mol) Natrium in 30 ml Methanol. Anschliessend wird die Lösung von 0,05 Mol Nickelsulfamat in 150 ml Methanol zugetropft und 5 Std. bei Raumtemperatur weiter gerührt. Zur Isolierung des Nickelsalzes wird vom ausgefallenen Natriumsulfamat abfiltriert, das Filtrat im Vakuum vollständig vom Methanol befreit, der Rückstand in Dichlormethan gelöst, erneut klar filtriert, das Lösungsmittel im Vakuum abdestilliert und das Nickelsalz 30 Stunden im Hochvakuum bei 0,01 mbar und 80° getrocknet.

$(C_{15}H_{25}N_2O_3)_2Ni$ (621,4)
berechnet : Ni 9,45 % N 9,02 %
gefunden : Ni 9,1 % N 8,9 %

Beispiel 22

20 g 2,2,6,6-Tetramethyl-4-(4-methoxycarbonyl-2-pyrrolidonyl-1)-piperidin gelöst in 60 ml Essigsäureanhydrid werden unter Zusatz von 1 Tropfen konz. Schwefelsäure 28 Std. bei 85° gerührt. Hierauf wird das überschüssige Essigsäureanhydrid im Vakuum vollständig abdestilliert, der Rückstand in einer Mischung aus Äther und Dichlormethan (9 : 1) gelöst, dreimal mit 50 ml 10 %iger Natriumhydrogencarbonatlösung und zweimal mit Wasser gewaschen, über Natriumsulfat getrocknet, das Lösungsmittel abdestilliert und das 1-Acetyl-2,2,6,6-tetramethyl-4-(4-methoxycarbonyl-2-pyrrolidonyl-1)-piperidin in Acetonitril-Diethyläther umkristallisiert, wodurch die reine Verbindung vom Smp. 112-113° erhalten wird.

$C_{17}H_{28}N_2O_4$ (324,4)
berechnet : C 62,94 % H 8,70 % N 8,64 %
gefunden : C 63,0 % H 8,7 % N 8,5 %

Beispiel 23

Ein Gemisch aus 42,3 g (0,15 Mol) 2,2,6,6-Tetramethyl-4-(4-methoxycarbonyl-2-pyrrolidonyl-1)-piperidin, 27,6 g (0,2 Mol) fein pulverisiertem Kaliumcarbonat und 24,2 g (0,2 Mol) Allylbromid in 100 ml 2-Butanon wird unter Rühren in einer Stickstoffatmosphäre 24 Std. auf Rückflusstemperatur erhitzt. Zur Aufarbeitung wird das Reaktionsgemisch filtriert, das Filtrat im Vakuum vom Lösungsmittel befreit und der Rückstand zweimal in n-Hexan umkristallisiert, wodurch farbloses 1-Allyl-2,2,6,6-tetramethyl-4-(4-methoxycarbonyl-2-pyrrolidonyl-1)-piperidin vom Smp. 67-69° erhalten wird.

$C_{18}H_{30}N_2O_3$ (322,4)

| | | | |
|---|---|---|---|
| berechnet : | C 67,05 % | H 9,38 % | N 8,69 % |
| gefunden : | C 67,2 % | H 9,3 % | N 8,8 % |

Beispiel 24

Analog dem Beispiel 23 wird aus 2,2,6,6-Tetramethyl-4-(4-carboxy-2-pyrrolidonyl-1)-piperidin mit einem Mol Benzylbromid 2,2,6,6-Tetramethyl-4-(4-benzyloxycarbonyl-2-pyrrolidonyl-1)-piperidin hergestellt, als Hydrobromid isoliert und in Acetonitril umkristallisiert. Smp. 183-185°.

$C_{21}H_{31}N_2O_3Br$ (439,4)

| | | | | |
|---|---|---|---|---|
| berechnet : | C 57,41 % | H 7,11 % | N 6,38 % | Br 18,19 % |
| gefunden : | C 57,2 % | H 7,0 % | N 6,4 % | Br 18,4 % |

Beispiel 25

Analog dem Beispiel 23 wird aus 2 Mol 2,2,6,6-Tetramethyl-4-(4-methoxycarbonyl-2-pyrrolidonyl-1)-piperidin und 1 Mol α,α-Dibrom-p-xylol und anschliessender säulenchromatographischer Reinigung an Kieselgel 60 (Merck) (Eluierungsmittel : Diethyläther-Methanol 9 : 1) die Verbindung

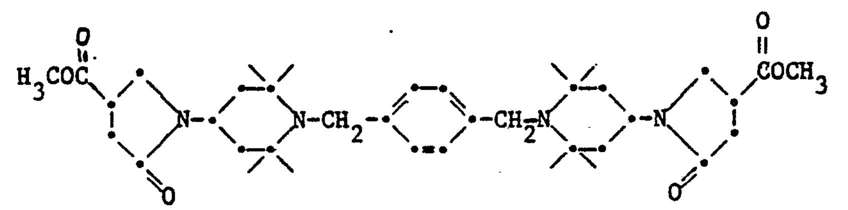

als Diastereoisomerengemisch vom Smp. 210-218° erhalten (Umkristallisation in Acetonitril).

$C_{38}H_{58}N_4O_6$ (666,86)

| | | | |
|---|---|---|---|
| berechnet : | C 68,44 % | H 8,77 % | N 8,40 % |
| gefunden : | C 68,6 % | H 8,6 % | N 8,4 % |

Beispiel 26

Analog dem Beispiel 1 bzw. dem Beispiel 7 wird aus 1-Benzyl-4-amino-2,2,6,6-tetramethylpiperidin (Smp. 73-75°) und Itaconsäuredimethylester 1-Benzyl-2,2,6,6-tetramethyl-4-(4-methoxycarbonyl-2-pyrrolidonyl-1)-piperidin hergestellt (Smp. ~ 75°).

$C_{22}H_{32}N_2O_3$ (372,5)

| | | | |
|---|---|---|---|
| berechnet : | C 70,94 % | H 8,66 % | N 7,52 % |
| gefunden : | C 71,4 % | H 8,8 % | N 7,7 % |

Beispiel 27

Zu einer Lösung von 22,6 g (0,08 Mol) 2,2,6,6-Tetramethyl-4-(4-methoxycarbonyl-2-pyrrolidonyl-1)-piperidin in 60 ml Benzol und 30 ml Tetrahydrofuran tropft man unter Rühren bei 20-25° innerhalb einer Stunde die Lösung von 6,9 g (0,04 Mol) Hexamethylendiisocyanat in 10 ml Benzol. Nach 18 Std. Rühren bei Raumtemperatur wird vom ausgefallenen Bisharnstoff-Derivat (Diastereoisomerengemisch) der Struktur

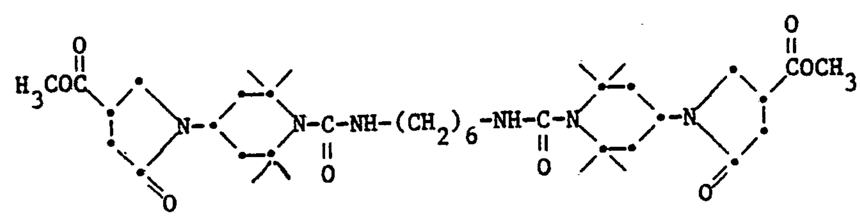

abfiltriert und in Tetrahydrofuran umkristallisiert. Smp. 120-123° (Zersetzung).

## Beispiel 28

Intermolekulare Polykondensationsverbindung aus 1-(2-Hydroxyethyl)-2,2,6,6-tetramethyl-4-(4-methoxycarbonyl-2-pyrrolidonyl-1)-piperidin :

A) 1-(2-Hydroxyethyl)-2,2,6,6-tetramethyl-4-(4-methoxycarbonyl-2-pyrrolidonyl-1)-piperidin (monomer). Ein Autoklav wird mit einer Lösung von 56,5 g (0,2 Mol) 2,2,6,6-Tetramethyl-4-(4-methoxycarbonyl-2-pyrrolidonyl-1)-piperidin in 170 ml Methanol, 0,8 ml konz. Salzsäure und 17,6 g (0,4 Mol) Aethylenoxid beschickt und dieses Reaktionsgemisch unter einer $N_2$-Atmosphäre 20 Std. unter Rühren auf 100-105° erhitzt. Nach dem Abkühlen wird das Gemisch vom überschüssigen Aethylenoxid sowie vom Methanol befreit und der Rückstand säulenchromatographisch an Kieselgel 60 (0,63-0,200 mm ; Merck) weiter gereinigt (Eluierungsmittel : Diethyläther-Methanol 85 : 15), wodurch reines I isoliert wird.

$C_{17}H_{30}N_2O_2$ (326,4)
berechnet : C 62,55 % H 9,27 % N 8,5 %
gefunden : C 62,1 % H 9,2 % N 8,3 %

B) Um eine unkontrollierte intermolekulare Polykondensation zu vermeiden, wird der erhaltene Hydroxyester I sofort der Polykondensation in Gegenwart von Tetrabutyl-orthotitanat in Xylol (analog Beispiel 6) während 4 Std. unterworfen, wodurch der Polyester der Struktur II (Erweichungspunkt ca. 160° ; Kofler-Bank) mit einem mittleren Molekulargewicht ($M_n$) von 8'100 (Dampfdruckosmometer) erhalten wird.

$(C_{16}H_{26}N_2O_3)_n$ $(294,4)_n$
berechnet : N 9,52 %
gefunden : N 0,3 %

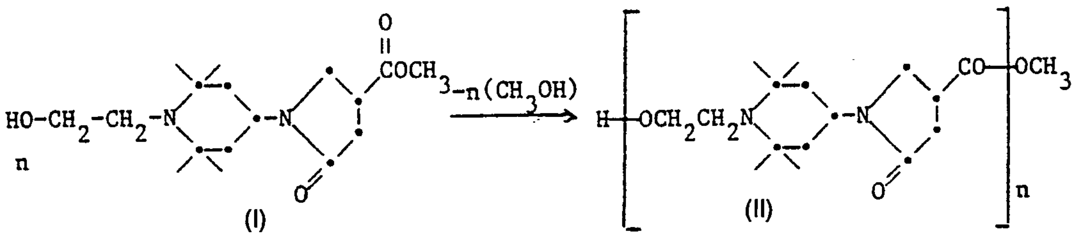

(I) (II)

## Beispiel 29

(I) 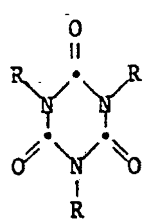

R: 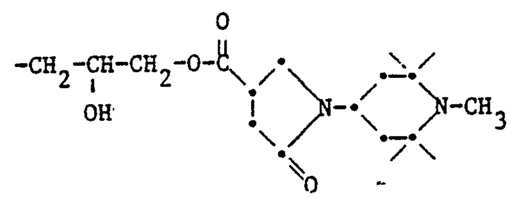

Eine Schmelze aus 33,9 g (0,12 Mol) 1,2,2,6,6-Pentamethyl-4-(4-carboxy-2-pyrrolidonyl-1)-piperidin, 12,3 g (0,04 Mol) Trigylcidylisocyanurat (96,8 %ig) und 0,2 g Dimethylbenzylamin werden in einer Stickstoffatmosphäre 20 Std. auf 145-150° erhitzt. nach dem Abkühlen auf 50° wird das Reaktionsgemisch in Dichlormethan gelöst, filtriert und die Verbindung I durch Eingiessen der Lösung in 500 ml n-Hexan unter kräftigem Turbinieren gefällt. Der Niederschlag wird abgetrennt, erneut in Dichlormethan gelöst und nun in n-Hexan-Diethyläther (3 : 1) gefällt. Das so erhaltene amorphe Isomerengemisch besitzt einen Erweichungspunkt von ca. 135° (Kofler-Bank).

$C_{57}H_{93}N_9O_{15}$ (1 144,4)
berechnet : C 59,82 % H 8,19 % N 11,02 %
gefunden : C 59,6 % H 8,3 % N 10,6 %

## Beispiel 30

Analog dem Beispiel 28 wird aus 2 Mol 1,2,2,6,6-Pentamethyl-4-(4-carboxy-2-pyrrolidonyl-1)-piperidin und 1 Mol Bisphenol-A-diglycidylether durch Erhitzen in 1-Methyl-2-pyrrolidon als Lösungsmittel die Verbindung

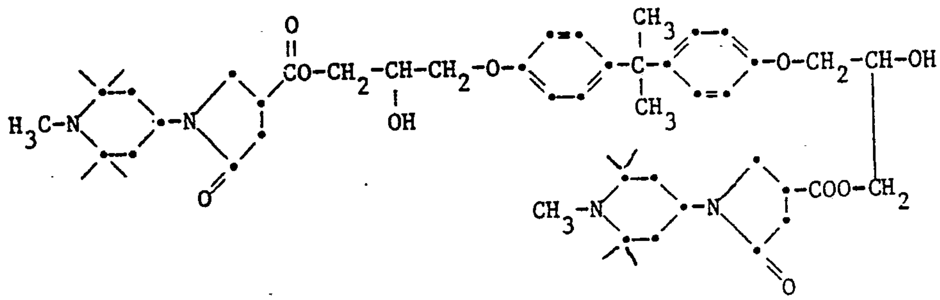

als amorphes Isomerengemisch erhalten Erweichungspunkt : ca. Das $^1$H-NMR-Spektrum (100 MHz) ist mit der angegebenen Struktur (Isomerengemisch) gut verträglich.

Beispiel 31

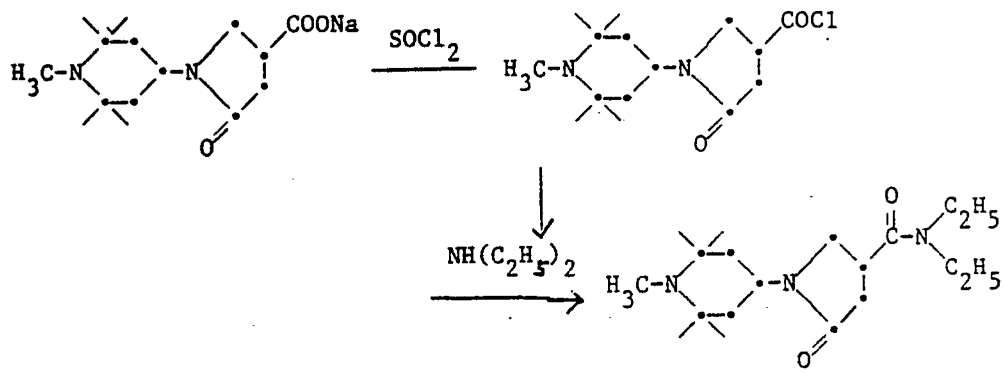


Zu einer Suspension von 24,1 g feinpulvrigem, trockenem Natriumsalz des 1,2,2,6,6-Pentamethyl-4-(4-carboxy-2-pyrrolidonyl-1)-piperidin in 75 ml Toluol und 0,5 ml Dimethylformamid tropft man bei ca. 0° innerhalb 40 Min. 9,52 g Thionylchlorid in 25 ml Toluol. Anschliessend wird 2 Std. bei Raumtemperatur weiter gerührt. Nun wird zum gebildeten 1,2,2,6,6-Pentamethyl-4-(4-chlorocarbonyl-2-pyrrolidonyl-1)-piperidin wiederum bei ca. 0° innerhalb 1,5 Std. 17,6 ml Diäthylamin in 25 ml Toluol getropft und hierauf weitere 14 Std. bei Raumtemperatur gerührt. Zur Aufarbeitung wird das Reaktionsgemisch filtriert, die Toluollösung fünfmal mit Wasser gewaschen, über Natriumsulfat getrocknet, mit Tonsil AC geklärt und das Lösungsmittel im Vakuum abdestilliert. Das Rohprodukt wird wiederholt in Hexan umkristallisiert, wodurch 1,2,2,6,6-Pentamethyl-4-(4-diäthylaminocarbonyl-2-pyrrolidonyl-1)-piperidin vom Smp. 98-99° erhalten wird.

$C_{19}H_{35}N_3O_2$ (337,51)

| | | | |
|---|---|---|---|
| berechnet : | C 67,62 % | H 10,45 % | N 12,45 % |
| gefunden : | C 67,3 % | H 10,4 % | N 12,3 % |

**Ansprüche**

1. Pyrrolidone der Formel I oder deren Salze

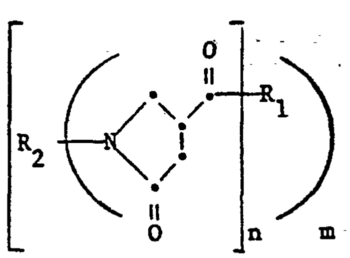

(I)

worin n 1, 2, 3 oder 4 ist, und m 1 oder 2 ist, wobei bei n gleich 2, 3 oder 4 m 1 ist und $R_1$ eine Hydroxylgruppe ist, deren Wasserstoffatom gegen ein Aequivalent Ca, Mg, Al, Zn, Co oder Ni ausgetauscht sein kann, und bei n gleich 1 $R_1$ $C_{1-20}$-Alkoxy, $C_{3-20}$ Oxaalkoxy, $C_{3-20}$ Alkenyloxy, $C_{3-6}$ Alkinyloxy, $C_{5-7}$ Cycloalkoxy, $C_{6-18}$ Aryloxy, ($C_{1-8}$ Alkyl)-phenoxy, Halogenphenoxy, Hydroxyphenoxy oder ($C_{1-8}$ Alkyl)-hydroxyphenoxy, ferner $C_{7-16}$ Aralkoxy, das im Phenylkern durch $C_{1-8}$ Alkyl, Halogen und/oder

Hydroxy substituiert sein kann, ferner 2-Hydroxyäthoxy, das in 2-Stellung Methyl tragen und zudem in 2-Stellung Phenyl oder Phenoxymethyl tragen kann, ferner Amino, $C_{1-20}$ Alkylamino, $C_{3-14}$ Alkenylamino, Di-$C_{1-20}$-alkylamino, Di-$C_{3-14}$-alkenylamino, $C_{5-7}$-Cycloalkylamino, Di-$C_{5-7}$-cycloalkylamino, $C_{6-18}$ Arylamino, ($C_{1-8}$ Alkylphenyl)-amino, (Halogenphenyl)-amino, (Hydroxyphenyl)-amino oder ($C_{1-8}$ Alkyl-hydroxyphenyl)-amino, wobei die Aminogruppe als weiteren N-Substituenten $C_{1-8}$ Alkyl tragen kann oder $R_1$ einen Rest der Formel IVa

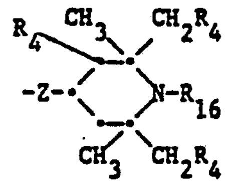

(IVa)

bedeutet, worin $R_4$ H oder Methyl ist, $R_{16}$ H, $C_1$-$C_{16}$ Alkyl, $C_3$-$C_8$-Alkenyl, Propargyl, $C_7$-$C_{16}$ Aralkyl, $C_1$-$C_4$ Alkanoyl, $C_3$-$C_5$ Alkenoyl, $C_3$-$C_8$ β-Hydroxyalkyl, $C_8$-$C_{12}$ β-Hydroxyaralkyl, ($C_1$-$C_4$ Alkoxycarbonyl)-methyl, Oxyl oder 2-Hydroxy-3-phenoxy-propyl ist, und Z gleich O, NH oder $NR_z$ ist, wobei $R_z$ $C_{1-12}$ Alkyl ist, und $R_1$ bei n gleich 2 —O—$R_3$—O— ist, worin $R_3$ $C_{2-20}$ Alkylen, $C_{4-8}$ Alkenylen, $C_4$ Alkinylen, $C_{5-6}$ Cycloalkylen, $C_{6-10}$ Arylen oder $C_{7-16}$ Aralkylen ist, oder eine Gruppe der Formel V

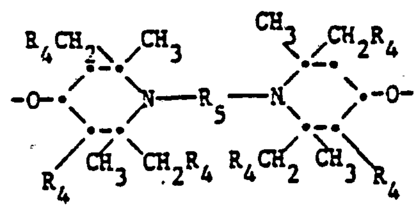

(V)

mit $R_4$ gleich H oder Methyl und $R_5$ gleich 2-Butenylen oder p-Phenylendimethylen ist, oder $R_1$ ferner —N($R_6$)—$R_7$—N($R_6$)— ist, wobei $R_6$ H, $C_{1-6}$ Alkyl, $C_{3-5}$ Alkenyl, $C_{5-6}$ Cycloalkyl, Phenyl, $C_{7-12}$ Aralkyl oder 2,2,6,6-Tetramethylpiperidin-4-yl mit H, Methyl oder Benzyl am Piparidin N-Atom, und $R_7$ gleich $C_{2-12}$ Alkylen, $C_{3-12}$ Oxaalkylen, $C_{3-12}$ Azaalkylen, $C_{6-12}$ Arylen, $C_{8-15}$ Aralkylen, $C_{5-6}$ Cycloalkylen bedeutet, und $R_1$ ferner —O—$CH_2$—C(OH)($R_8$)—$R_9$—C(OH)($R_8$)$CH_2$—O— ist, wobei $R_8$ H oder Methyl, oder die beiden Reste $R_8$ zusammen mit dem sie bindenden Rest einen 5- oder 6-gliedrigen Cycloalkyl-Ring bilden können, und mit $R_9$ eine direkte Bindung, $C_{1-6}$ Alkylen, $C_{3-6}$ Oxaalkylen oder mit $R_9$ eine Gruppe der Formel VI oder VII

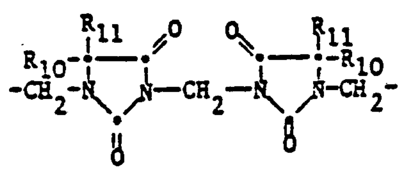

(VI) oder

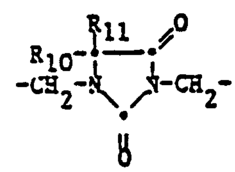

(VII)

bildet, worin $R_{10}$ und $R_{11}$ H oder $C_{1-4}$ Alkyl oder $R_{10}$ und $R_{11}$ zusammen Tetramethylen oder Pentamethylen bedeuten, und $R_1$ bei n gleich 3 einen Trioxyrest eines $C_{3-20}$ Alkantriols, in dem ein C-Atom an nicht mehr als ein O-Atom gebunden ist, bedeutet oder $R_1$ ein Rest VIII

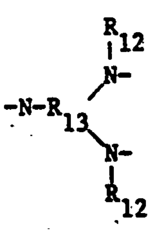

(VIII)

ist, wobei $R_{12}$ H, $C_{1-4}$ Alkyl, $C_{3-5}$ Alkenyl, Phenyl, Phenyl oder Benzyl, und $R_{13}$ ein dreiwertiger Rest, abgeleitet von $C_{3-20}$ Alkyl, $C_{6-12}$ Aryl oder $C_{7-16}$ Aralkyl, ist, oder $R_1$ ferner einen Rest IX

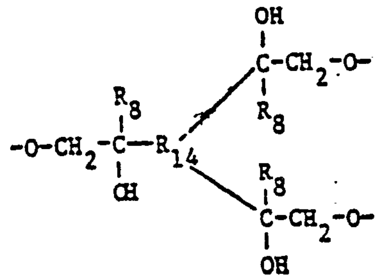

(IX)

bedeutet, wobei $R_8$ H oder Methyl ist, oder zwei Reste $R_8$ zusammen mit dem sie bindenden Rest einen 5- oder 6-gliedrigen Cycloalkyl-Ring bilden, und $R_{14}$ ein dreiwertiger Rest, abgeleitet von $C_{3-18}$ Alkyl, ist, oder $R_{14}$ eine Gruppe der Formeln X oder XI

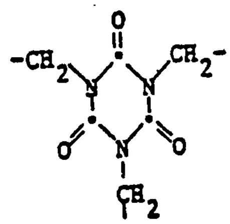

(X)

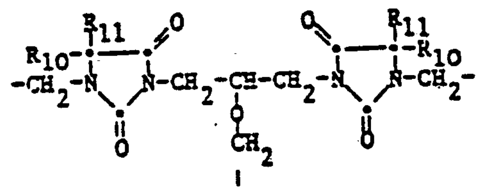

(XI)

bedeutet, wobei $R_{10}$ und $R_{11}$ H oder $C_{1-4}$ Alkyl sind, oder $R_{10}$ und $R_{11}$ zusammen Tetramethylen oder Pentamethylen bedeuten, und $R_1$ bei n gleich 4 einen Tetraoxyrest eines $C_{4-20}$ Alkantetrols, in dem ein C-Atom an nicht mehr als ein O-Atom gebunden ist, bedeutet, oder $R_1$ ein Rest XII

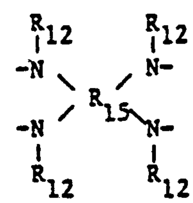

(XII)

ist, wobei $R_{12}$ H, $C_{1-4}$ Alkyl, $C_{3-5}$ Alkenyl, Phenyl oder Benzyl bedeutet, und $R_{15}$ einen 4-wertigen Rest, abgeleitet von $C_{3-20}$ Alkyl, $C_{6-12}$ Aryl oder $C_{7-16}$ Aralkyl, bedeutet, und der Substituent $R_2$ in der Formel I bei m gleich 1 einen Rest XIII, XIV oder XV bedeutet

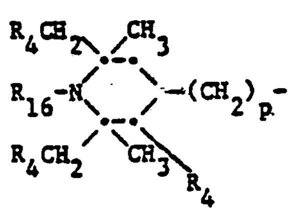

(XIII)

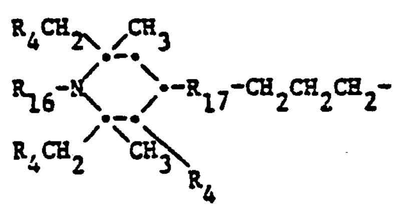

(XIV)

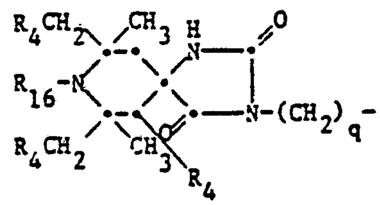

(XV)

worin $R_4$ und $R_{16}$ die oben angegebene Bedeutung haben, p 0 oder 2 ist, $R_{17}$ O oder $NR_{18}$ ist, $R_{18}$ H, Methyl, Benzyl, Allyl oder $C_{2-5}$ Alkanoyl ist, und q 2, 3, 4 oder 5 ist, und der Rest $R_2$ bei m gleich 2 einen Rest XVI, XVII, XVIII, XIX oder XX bedeutet

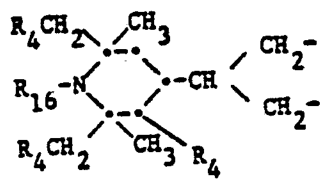

(XVI)

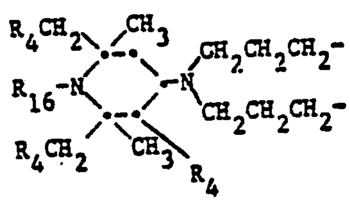

(XVII)

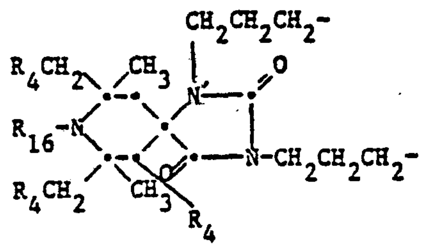

(XVIII)

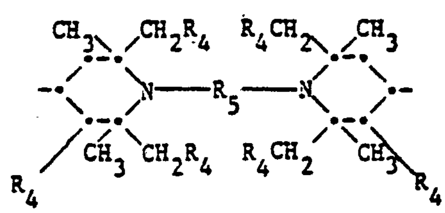

(XIX)

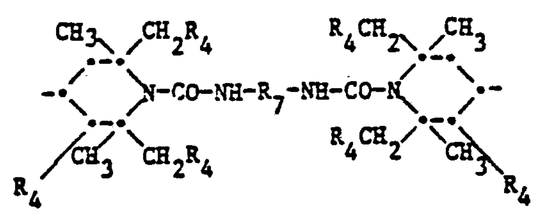

(XX)

worin $R_4$, $R_5$, $R_7$ und $R_{16}$ obige Bedeutung haben, sowie Pyrrolidone, welche durch Verknüpfung von $R_1$ und $R_2$ oligomerisiert oder polymerisiert werden können, und der Formel III entsprechen

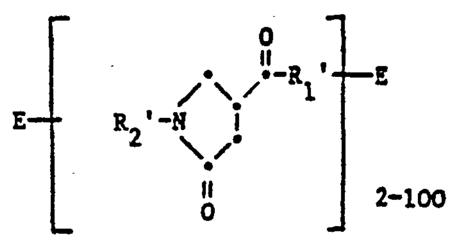

(III)

worin $R_1'$ und $R_2'$ den Resten $R_1$ und $R_2$ entsprechen und E H oder $C_{1-6}$ Alkoxy ist.

2. Pyrrolidone nach Anspruch 1, worin n 1 oder 2 ist und $R_1$ eine Hydroxylgruppe ist, deren Wasserstoffatom gegen ein Aequivalent Ca, Mg, Al, Zn, Co oder Ni ausgetauscht sein kann, und ferner $R_1$ bei n gleich 1 $C_{1-12}$ Alkoxy, Amino, $C_{1-12}$ Alkylamino oder Di-$C_{1-12}$-alkylamino ist, $R_1$ bei n gleich 2 $C_{2-8}$ Alkylendioxy oder $C_{2-8}$ Alkylendiamino ist, m 1 ist, und $R_2$ ein Rest XIII

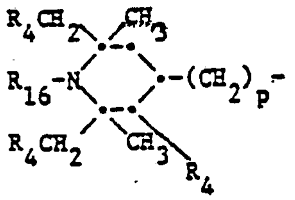

(XIII)

ist, worin p Null ist, $R_4$ H ist, und $R_{16}$ H, $C_{1-8}$ Alkyl, Benzyl, $C_{1-4}$-Alkanoyl oder $C_{2-6}$ β-Hydroxyalkyl ist.

3. Pyrrolidone nach Anspruch 2, worin n 1 ist und $R_1$ eine Hydroxylgruppe ist, deren Wasserstoffatom gegen ein Aequivalent Ca, Mg, Al, Zn, Co oder Ni ausgetauscht sein kann, und ferner $R_1$ $C_{1-6}$ Alkoxy, Amino, $C_{1-6}$ Alkylamino oder Di-$C_{1-6}$-alkylamino ist, m 1 ist, und $R_2$ ein Rest XIII ist, worin p Null ist, $R_4$ H ist und $R_{16}$ H, Methyl oder Benzyl ist.

4. Pyrrolidone nach Anspruch 1 der Formel III, worin $R_1'$ Sauerstoff ist und —$R_2'$— ein Rest XXI

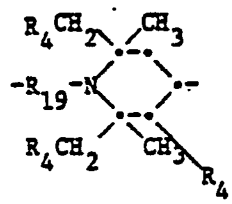

(XXI)

ist, in dem $R_4$ H ist und $R_{19}$ Aethylen, 2-Methyläthylen, 2-Aethyläthylen, 2-Phenyläthylen, 2-Butenylen oder p-Phenylendimethylen ist, und E H oder $C_{1-6}$ Alkoxy ist.

5. Pyrrolidone nach Anspruch 1 der Formel III, worin $R_1'$ Sauerstoff und $R_2'$ 1,3-Propylen ist, das in 2-Stellung einen Rest XIII gemäss Anspruch 2 trägt, in dem p Null ist, $R_4$ H ist und $R_{16}$ H, Methyl oder Benzyl ist und E H oder $C_{1-6}$ Alkoxy ist.

6. Pyrrolidon nach Anspruch 1 : 1,2,2,6,6-Pentamethyl-4-(4-methoxycarbonyl-2-pyrrolidonyl-1)-piperidin.

7. Pyrrolidon nach Anspruch : 2,2,6,6-Tetramethyl-4-(4-methoxycarbonyl-2-pyrrolidonyl-1)-piperidin.

8. Pyrrolidon nach Anspruch 1 : Pentaerythritol-tetra-[1-1,2,2,6,6-pentamethyl-4-piperidinyl)-2-pyrrolidon-4-carboxylat.

9. Verfahren zur Herstellung von Pyrrolidonen der Formel I gemäss Anspruch 1, dadurch gekennzeichnet, dass man Itaconsäure oder einen Ester davon mit einem Amin XXIII

$R_2-NH_2$ +

(XXIII)

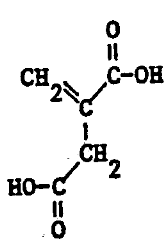

unter Ringschlussbedingungen umsetzt und, wenn erwünscht, in so erhaltenen Pyrrolidonen der Formel I die veresterte oder freie Hydroxygruppe $R_1$ umestert bzw. verestert, verseift oder amidiert, oder ein Salz davon bildet.

10. Stoffzusammensetzung aus einem Polymeren und mindestens einer Verbindung der Formel I aus einem der Ansprüche 1-9.

11. Stoffzusammensetzung gemäss Anspruch 10, dadurch gekennzeichnet, dass das Polymere ein Polyolefin, ein Styrolpolymerisat, ein Polyamid oder ein Polyurethan ist.

12. Verfahren zum Stabilisieren von Polymeren, dadurch gekennzeichnet, dass man dem Polymeren mindestens eine Verbindung der Formel I aus einem der Ansprüche 1-9 zusetzt.

**Claims**

1. A pyrrolidone of the formula I

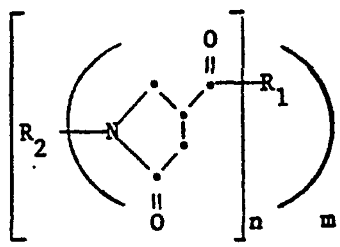

(I)

wherein n is 1, 2, 3 or 4 and m is 1 or 2, with the proviso that, if n is 2, 3 or 4, m is 1 and $R_1$ is a hydroxyl group in which the hydrogen atom can be replaced by one equivalent of Ca, Mg, Al, Zn, Co or Ni ; and, if n is 1, $R_1$ is $C_1$-$C_{20}$ alkoxy, $C_3$-$C_{20}$ oxaalkoxy, $C_3$-$C_{20}$-alkenyloxy, $C_3$-$C_6$ alkynyloxy, $C_5$-$C_7$ cycloalkoxy, $C_6$-$C_{18}$ aryloxy, ($C_1$-$C_8$-alkyl)phenoxy, halophenoxy, hydroxyphenoxy or ($C_1$-$C_8$ alkyl)hydroxyphenoxy, and and $C_7$-$C_{16}$ aralkoxy which can be substituted in the phenyl nucleus by $C_1$-$C_8$ alkyl, halogen and/or hydroxy, and 2-hydroxyethoxy which can carry methyl in the 2-position and, in addition, can carry phenyl or phenoxymethyl in the 2-position, and is also amino, $C_1$-$C_{20}$-alkylamino, $C_3$-$C_{14}$ alkenylamino, di($C_1$-$C_{20}$)alkylamino, di($C_3$-$C_{14}$)alkenylamino, $C_5$-$C_7$ cycloalkylamino, di($C_5$-$C_7$)cycloalkylamino, $C_6$-$C_{18}$ arylamino, ($C_1$-$C_8$ alkylphenyl)amino, (halophenyl)amino, (hydroxyphenyl)amino or ($C_1$-$C_8$ alkylhydroxyphenyl)amino, and the amino group can carry $C_1$-$C_8$-alkyl as further N-substituent ; or $R_1$ is a radical of the formula IVa

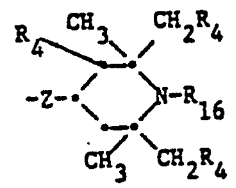

(IVa)

wherein $R_4$ is hydrogen or methyl, $R_{16}$ is hydrogen, $C_1$-$C_{16}$ alkyl, $C_3$-$C_8$-alkenyl, propargyl, $C_7$-$C_{16}$ aralkyl, $C_1$-$C_4$ alkanoyl, $C_3$-$C_5$ alkenoyl, $C_3$-$C_8$-β-hydroxyalkyl, $C_8$-$C_{12}$ β-hydroxyaralkyl, ($C_1$-$C_4$ alkoxycarbonyl)methyl, oxyl or 2-hydroxy-3-phenoxypropyl, and Z is O, NH or $NR_z$, in which $R_z$ is $C_1$-$C_{12}$ alkyl ; and $R_1$, if n is 2, is —O—$R_3$—O, wherein $R_3$ is $C_2$-$C_{20}$ alkylene, $C_4$-$C_8$ alkenylene, $C_4$ alkynylene, $C_5$-$C_6$ cycloalkylene, $C_6$-$C_{10}$-arylene or $C_7$-$C_{16}$ aralkylene, or is a group of the formula V

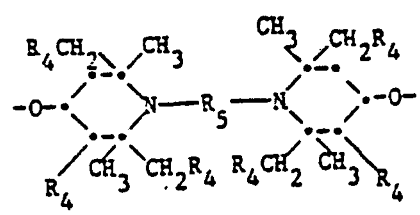

(V)

wherein $R_4$ is hydrogen or methyl and $R_5$ is 2-butenylene or p-phenylene-dimethylene ; or $R_1$ is also —N($R_6$)—$R_7$—N($R_6$), wherein $R_6$ is hydrogen, $C_1$-$C_6$ alkyl, $C_3$-$C_5$ alkenyl, $C_5$-$C_6$ cycloalkyl, phenyl, $C_7$-$C_{12}$ aralkyl or 2,2,6,6-tetramethylpiperidin-4-yl which carries hydrogen, methyl or benzyl at the piperidine N-atom, and $R_7$ is $C_2$-$C_{12}$ alkylene, $C_3$-$C_{12}$ oxaalkylene, $C_3$-$C_{12}$ azaalkylene, $C_6$-$C_{12}$ arylene, $C_8$-$C_{15}$ aralkylene, $C_5$-$C_6$ cycloalkylene ; and $R_1$ is also —O—$CH_2$—C(OH)($R_8$)—$R_9$—C(OH)($R_8$)$CH_2$—O—, wherein $R_8$ is hydrogen or methyl, or both radicals $R_8$, together with the radical which links them, can form a 5- or 8-membered cycloalkyl ring, and $R_8$ with $R_9$ forms a direct bond, $C_1$-$C_6$ alkylene, $C_3$-$C_6$ oxaalkylene, or $R_8$ with $R_9$ forms a group of the formula VI or VII

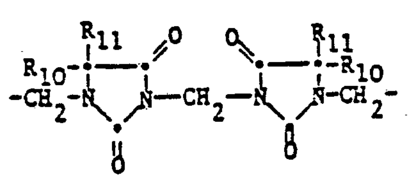

(VI) or

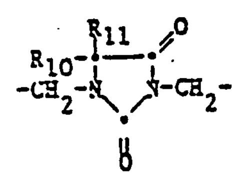

(VII)

wherein $R_{10}$ and $R_{11}$ are hydrogen or $C_1$-$C_4$ alkyl, or $R_{10}$ and $R_{11}$ together are tetramethylene or pentamethylene ; and $R_1$, if n is 3, is a trioxy radical of a $C_3$-$C_{20}$ alkanetriol, in which one C-atom is attached to not more than one O-atom ; or $R_1$ is a radical of the formula VIII

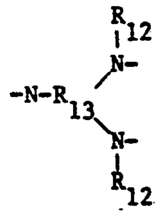

(VIII)

wherein $R_{12}$ is hydrogen, $C_1$-$C_4$ alkyl, $C_3$-$C_5$ alkenyl, phenyl or benzyl, and $R_{13}$ is a trivalent radical derived from $C_3$-$C_{20}$ alkyl, $C_6$-$C_{12}$ aryl or $C_7$-$C_{16}$ aralkyl ; or $R_1$ is also a radical of the formula IX

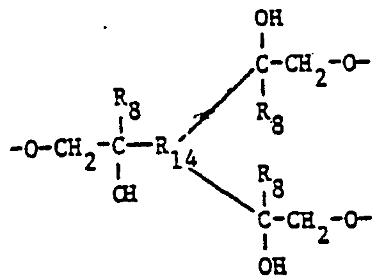

(IX)

wherein $R_8$ is hydrogen or methyl, or two radicals $R_8$, together with the radical which links them, form a 5- or 6-membered cycloalkyl ring, and $R_{14}$ is a trivalent radical derived from $C_3$-$C_{18}$ alkyl, or $R_{14}$ is a group of the formula X or XI

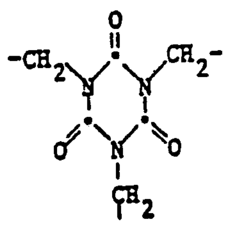

(X)

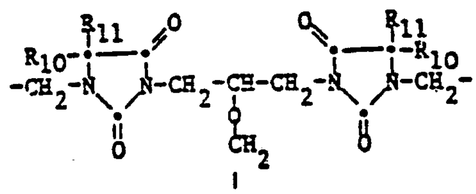

(XI)

wherein $R_{10}$ and $R_{11}$ are hydrogen or $C_1$-$C_4$ alkyl, or $R_{10}$ and $R_{11}$ together are tetramethylene or pentamethylene ; and $R_1$, if n is 4, is a tetraoxy radical of a $C_4$-$C_{20}$ alkanetetrol in which one C-atom is attached to not more than one O-atom ; or $R_1$ is a radical of the formula XII

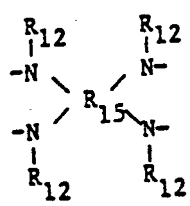

(XII)

wherein $R_{12}$ is hydrogen, $C_1$-$C_4$ alkyl, $C_3$-$C_5$ alkenyl, phenyl or benzyl, and $R_{15}$ is a tetravalent radical derived from $C_3$-$C_{20}$ alkyl, $C_6$-$C_{12}$ aryl or $C_7$-$C_{16}$ aralkyl, and the substituent $R_2$ in formula I, where m is 1, is a radical of the formula XIII, X or XV

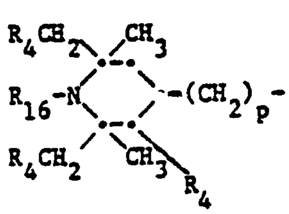

(XIII)

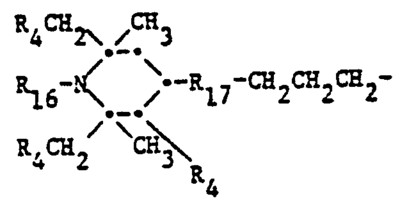

(XIV)

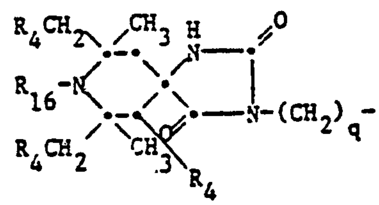

(XV)

wherein $R_4$ and $R_{16}$ are as defined above, p is 0 or 2, $R_{17}$ is O or $NR_{18}$, $R_{18}$ is hydrogen, methyl, benzyl, alkyl or $C_2$-$C_5$ alkanoyl, and q is 2, 3, 4 or 5 ; and the radical $R_2$, where m is 2, a radical of the formula XVI, XVII, XVIII, XIX or XX

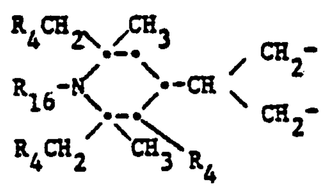

(XVI)

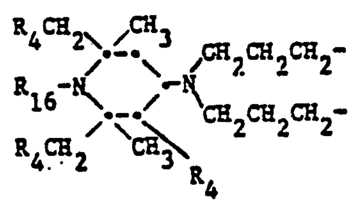

(XVII)

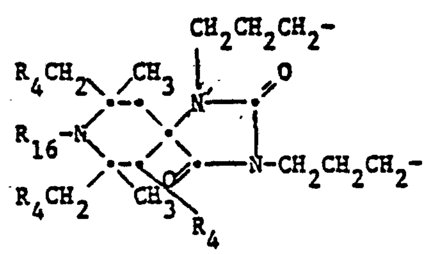

(XVIII)

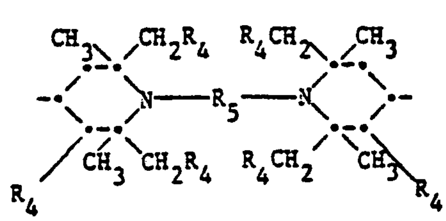

(XIX)

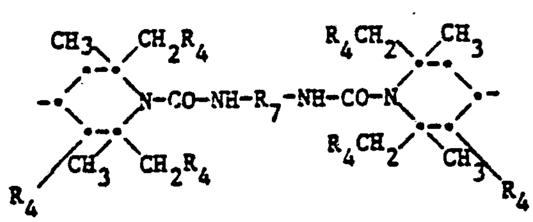

(XX)

wherein $R_4$, $R_5$, $R_7$ and $R_{16}$ are as defined above ; or a salt thereof, or a pyrrolidone which can be oligomerised or polymerised by linkage of $R_1$ and $R_2$, and has the formula III

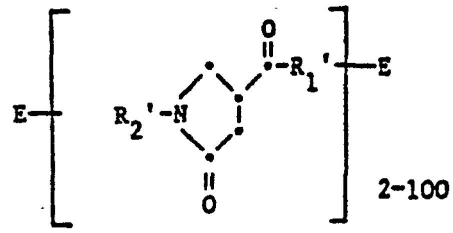

(III)

wherein $R_1'$ and $R_2'$ correspond to the radicals $R_1$ and $R_2$ and E is hydrogen or $C_1$-$C_6$ alkoxy.

2. A pyrrolidone according to claim 1, wherein n is 1 or 2 and $R_1$ is a hydroxyl group in which the hydrogen atom can be replaced by one equivalent of Ca, Mg, Al, Zn, Co or Ni, and $R_1$, if n is 1, is $C_1$-$C_{12}$-alkoxy, amino, $C_1$-$C_{12}$ alkylamino or di($C_1$-$C_{12}$)alkylamino ; and $R_1$, if n is 2, is $C_2$-$C_8$ alkylenedioxy or $C_2$-$C_8$ alkylenediamino, m is 1, and $R_2$ is a radical of the formula XIII

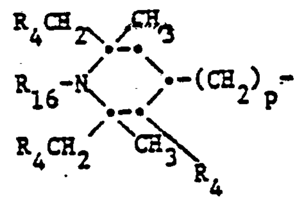

(XIII)

wherein p is 0, $R_4$ is hydrogen, and $R_{16}$ is hydrogen, $C_1$-$C_8$ alkyl, benzyl, $C_1$-$C_4$ alkanoyl or $C_2$-$C_6$ β-hydroxyalkyl.

3. A pyrrolidone according to claim 2, wherein n is 1 and $R_1$ is a hydroxyl group in which the hydrogen atom can be replaced by one equivalent of Ca, Mg, Al, Zn, Co or Ni, and $R_1$ is $C_1$-$C_6$ alkoxy, amino, $C_1$-$C_6$ alkylamino or di($C_1$-$C_6$)alkylamino, m is 1, and $R_2$ is a radical of the formula XIII, wherein p is O, $R_4$ is hydrogen, and $R_{16}$ is hydrogen, methyl or benzyl.

4. A pyrrolidone according to claim 1, of the formula III, wherein $R_1'$ is oxygen and —$R_2'$— is a radical of the formula XXI

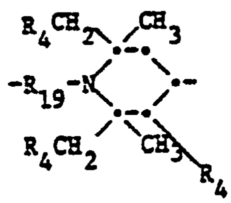

(XXI)

wherein $R_4$ is hydrogen and $R_{19}$ is ethylene, 2-methylethylene, 2-ethylethylene, 2-phenylethylene, 2-butenylene or p-phenylenedimethylene, and E is hydrogen or $C_1$-$C_6$ alkoxy.

5. A pyrrolidone according to claim 1 of the formula III, wherein $R_1'$ is oxygen and $R_2'$ is 1,3-propylene which carries in the 2-position a radical of the formula XIII according to claim 2, in which p is 0, $R_4$ is hydrogen, $R_{16}$ is hydrogen, methyl or benzyl, and E is hydrogen or $C_1$-$C_6$ alkoxy.

6. 1,2,2,6,6-Pentamethyl-4-(4-methoxycarbonyl-2-pyrrolidon-1-yl)-piperidine according to claim 1.

7. 2,2,6,6-Tetramethyl-4-(4-methoxycarbonyl-2-pyrrolidon-1-yl)-piperidine according to claim 1.

8. Pentaerythritol tetra-[-(1,2,2,6,6-pentamethyl-4-piperidinyl)-2-pyrrolidone-4-carboxylate] according to claim 1.

9. A process for the manufacture of a pyrrolidone of the formula I according to claim 1, which process comprises reacting itaconic acid, or an ester thereof, with an amine XXIII

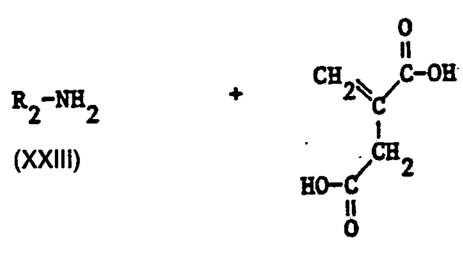

(XXIII)

under cyclisation conditions and, if desired, in the resultant pyrrolidones of the formula I, subjecting the esterified or free hydroxyl group $R_1$ to transesterification or esterification, saponification or amidation, or forming a salt thereof.

10. A composition of matter consisting of a polymer and at least one compound of the formula I according to any one of claims 1 to 9.

11. A composition of matter according to claim 10, wherein the polymer is a polyolefin, a styrene polymer, a polyamide or a polyurethane.

12. A process for stabilising polymers, which comprises adding to the polymer at least one compound of the formula I according to any one of claims 1 to 9.

**Revendications**

1. Pyrrolidones de formule (I) et sels de celles-ci

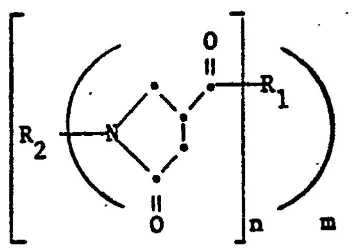

(I)

formule dans laquelle n est égal à 1, à 2, à 3 ou à 4, m est égal à 1 ou à 2, dans le cas où n est égal à 2, à 3 oú à 4, m est égal à 1 et $R_1$ est un radical hydroxy dont l'atome d'hydrogène peut être échangé contre un équivalent de Ca, Mg, Al, Zn, Co ou Ni, dans le cas où n est égal à 1 $R_1$ représente un alcoxy en $C_1$-$C_{20}$, un oxa-alcoxy en $C_3$-$C_{20}$, un alcényloxy en $C_3$-$C_{20}$, un alcynyloxy en $C_3$-$C_6$, un cycloalcoxy en $C_5$-$C_7$, un aryloxy en $C_6$-$C_{18}$, un alkylphénoxy dont l'alkyle contient de 1 à 8 atomes de carbone, un halogénophénoxy, un hydrophénoxy ou un ($C_1$-$C_8$-alkyl)-hydroxy-phénoxy, également un arylalcoxy en $C_7$-$C_{16}$ éventuellement porteur, sur son noyau aryle, d'un alkyle en $C_1$-$C_8$, d'un halogène et/ou d'un hydroxy, un hydroxy-2 éthoxy éventuellement porteur, en position 2, d'un radical méthyle et également d'un phényle ou d'un phénoxyméthyle, un amino, un alkylamino en $C_1$-$C_{20}$, un alcénylamino en $C_3$-$C_{14}$, un di-$C_1$-$C_{20}$-alkyl-amino, un di-$C_3$-$C_{14}$-alcényl-amino, un $C_5$-$C_7$-cycloalkylamino, un di-$C_5$-$C_7$-cycloalkylamino, un $C_6$-$C_{18}$-arylamino, un ($C_1$-$C_8$-alkylphényl)-amino, un (halogénophényl)amino, un (hydroxyphényl)-amino ou un ($C_1$-$C_8$-alkyl-hydroxyphényl)-amino, le groupe amino pouvant en outre porter sur son azote un alkyle en $C_1$-$C_8$, ou $R_1$ représente un radical répondant à la formule (IVa)

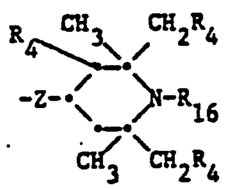

(IVa)

dans laquelle $R_4$ représente H ou un méthyle, $R_{16}$ représente H, un alkyle en $C_1$-$C_{16}$, un alcényle en $C_3$-$C_8$, un propargyle (propyne-2 yle), un aralkyle en $C_7$-$C_{16}$, un alcanoyle en $C_1$-$C_4$, un alcénoyle en $C_3$-$C_5$, un β-hydroxyalkyle en $C_3$-$C_6$, un β-hydroxyaralkyle en $C_8$-$C_{12}$, un ($C_1$-$C_4$-alcoxycarbonyl)-méthyle, un oxyle ou un hydroxy-2 phénoxy-3 propyle, et Z représente O, NH ou NRz, le symbole Rz désignant un alkyle en $C_1$-$C_{12}$, lorsque n est égal à 2, $R_1$ représente un groupement —O—$R_3$—O— dans lequel $R_3$ désigne un alkylène en $C_2$-$C_{20}$, un alcénylène en $C_4$-$C_8$, un alcynylène en $C_4$-, un cycloalkylène en $C_5$ ou $C_6$, un arylène en $C_6$-$C_{10}$ ou un aralkylène en $C_7$-$C_{16}$, ou un radical répondant à la formule (V)

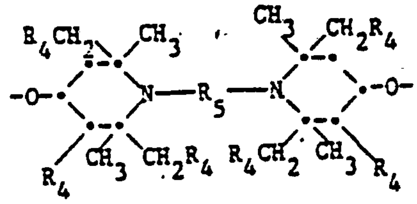

(V)

dans laquelle $R_4$ représente H ou un méthyle, et $R_5$ un radical butène-2 ylène ou p-phénylène-diméthylène, ou $R_1$ représente un groupement —N($R_6$)—$R_7$—N($R_6$)— dans lequel $R_6$ représente H, un alkyle en $C_1$-$C_6$, un alcényle en $C_3$-$C_5$, un cycloalkyle en $C_5$ ou $C_6$, un phényle, un aralkyle en $C_7$-$C_{12}$ ou

un radical tétraméthyl-2,2,6,6 pipéridyle-4 dont l'atome d'azote pipéridinique porte un atome d'hydrogène ou un radical méthyle ou benzyle, et $R_7$ représente un alkylène en $C_2$-$C_{12}$, un oxa-alkylène en $C_3$-$C_{12}$, un aza-alkylène en $C_3$-$C_{12}$, un arylène en $C_6$-$C_{12}$, un aralkylène en $C_8$-$C_{15}$ ou un cycloalkylène en $C_5$ ou $C_6$, ou $R_1$ représente un groupement $—O—CH_2—C(OH)(R_8)—R_9—C(OH)(R_8)CH_2—O—$ dans lequel $R_8$ représente H ou un méthyle ou les deux symboles $R_8$ peuvent former ensemble et avec le radical qui les unit un noyau cycloalkyle à 5 ou 6 maillons, et $R_9$ représente une liaison directe, un alkylène en $C_1$-$C_6$, un oxa-alkylène en $C_3$-$C_6$ ou un radical répondant à l'une des formules (VI) et (VII)

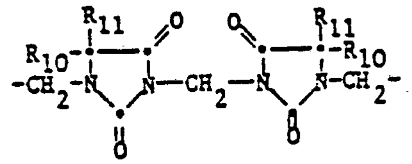 (VI) 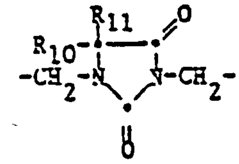 (VII)

dans lesquelles $R_{10}$ et $R_{11}$ représentent chacun un atome d'hydrogène ou un alkyle en $C_1$-$C_4$ ou encore $R_{10}$ et $R_{11}$ forment ensemble un radical tétraméthylène ou pentaméthylène, lorsque n est égal à 3, $R_1$ représente un radical trioxy d'un alcane-triol en $C_3$-$C_{20}$, radical dans lequel un atome de carbone est lié à au plus un atome d'oxygène, ou $R_1$ représente un radical répondant à la formule (VIII)

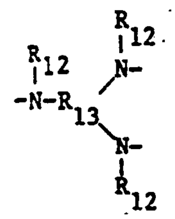 (VIII)

dans laquelle $R_{12}$ représente H, un alkyle en $C_1$-$C_4$, un alcényle en $C_3$-$C_5$, un phényle ou un benzyle et $R_{13}$ représente un radical trivalent dérivant d'un alkyle en $C_3$-$C_{20}$, d'un aryle en $C_6$-$C_{12}$ ou d'un aralkyle en $C_7$-$C_{16}$, ou $R_1$ représente un radical répondant à la formule (IX)

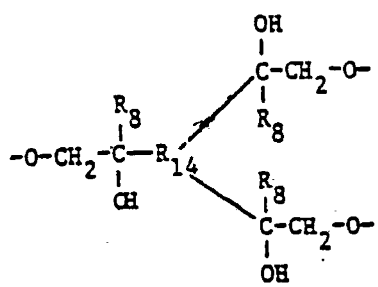 (IX)

dans laquelle $R_8$ représente H ou un méthyle, ou deux radicaux $R_8$ forment ensemble et avec le radical qui les unit un noyau cycloalkyle à 5 ou 6 maillons, et $R_{14}$ représente un radical trivalent dérivant d'un alkyle en $C_3$-$C_{18}$, ou $R_{14}$ représente un radical répondant à l'une des formules (X) et (XI)

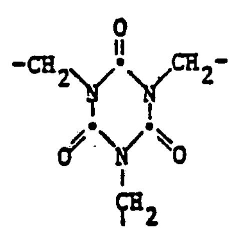 (X)

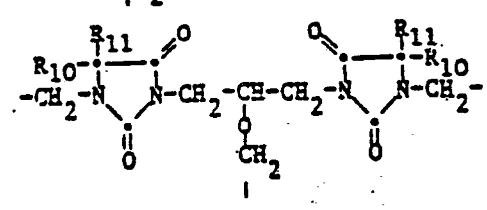 (XI)

dans lesquelles $R_{10}$ et $R_{11}$ représentent chacun H ou un alkyle en $C_1$-$C_4$, ou $R_{10}$ et $R_{11}$ forment ensemble un radical tétraméthylène ou pentaméthylène, et dans le cas où n est égal à 4, $R_1$ représente un

radical tétraoxy d'un alcane-tétrol en $C_4$-$C_{20}$, radical dans lequel un atome de carbone est lié à au plus un atome d'oxygène, ou $R_1$ représente un radical répondant à la formule (XII)

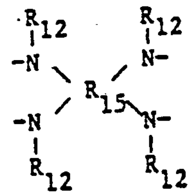

(XII)

dans laquelle $R_{12}$ représente H, un alkyle en $C_1$-$C_4$, un alcényle en $C_3$-$C_5$, un phényle ou un benzyle et $R_{15}$ représente un radical quadrivalent dérivant d'un alkyle en $C_3$-$C_{20}$, d'un aryle en $C_6$-$C_{12}$ ou d'un aralkyle en $C_7$-$C_{16}$, et $R_2$ représente dans le cas où m est égal à 1, un radical répondant à l'une des formules (XIII), (XIV) et (XV)

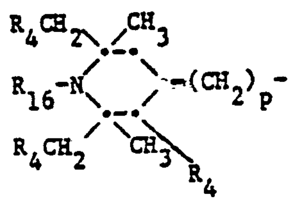

(XIII)

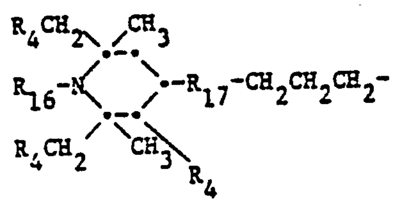

(XIV)

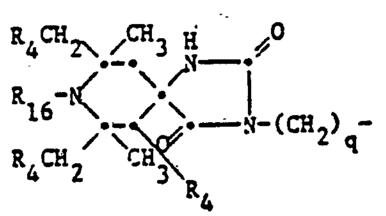

(XV)

dans lesquelles $R_4$ et $R_{16}$ ont les significations précédemment données, p est égal à 0 ou à 2, $R_{17}$ représente O ou $NR_{18}$, $R_{18}$ représente H, un méthyle, un benzyle, un allyle ou un alcanoyle en $C_2$-$C_5$, et q est égal à 2, à 3, à 4 ou à 5, ou dans le cas où m est égal à 2, $R_2$ représente un radical répondant à l'une des formules (XVI), (XVII), (XVIII), (XIX) et (XX)

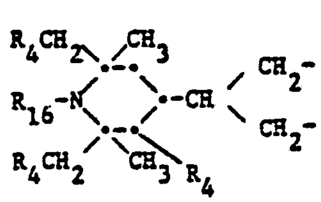

(XVI)

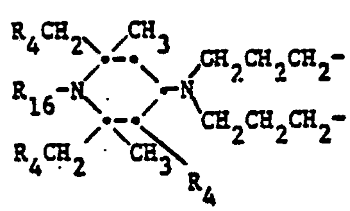

(XVII)

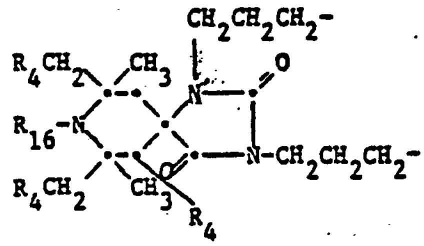

(XVIII)

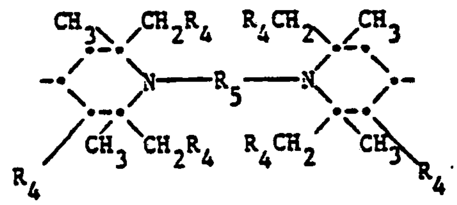

(XIX)

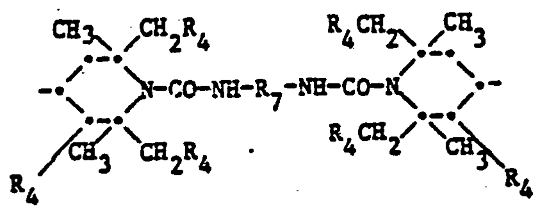

(XX)

dans lesquelles $R_4$, $R_5$, $R_7$ et $R_{16}$ ont les significations indiquées ci-dessus, ainsi que les pyrrolidones qui sont oligomérisées ou polymérisées par union de $R_1$ et $R_2$ et qui répondent à la formule (III)

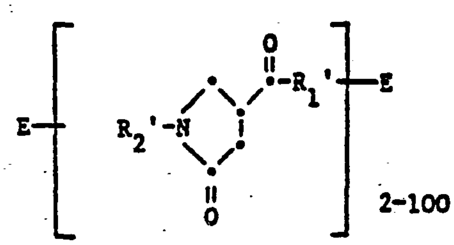

(III)

dans laquelle $R_1'$ et $R_2'$ correspondent aux radicaux $R_1$ et $R_2$, et E représente H ou un alcoxy en $C_1$-$C_6$.

2. Pyrrolidones selon la revendication 1, dans lesquelles n est égal à 1 ou à 2, $R_1$ représente un radical hydroxy dont l'atome d'hydrogène peut être remplacé par un équivalent de Ca, Mg, Al, Zn, Co ou Ni, et $R_1$ peut en outre représenter, dans le cas où n est égal à 1, un radical alcoxy en $C_1$-$C_{12}$, un radical amino, un radical alkylamino en $C_1$-$C_{12}$ ou un radical di-($C_1$-$C_{12}$-alkyl)-amino, et, dans le cas où n est égal à 2, un radical alkylène-dioxy en $C_2$-$C_8$ ou un radical alkylènediamino en $C_2$-$C_8$, m est égal à 1, et $R_2$ représente un radical répondant à la formule (XIII)

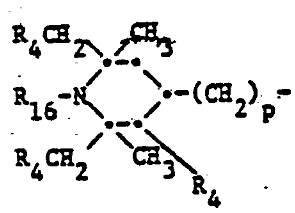

(XIII)

dans laquelle p est égal à 0, $R_4$ représente H et $R_{16}$ représente H, un alkyle en $C_1$-$C_8$, un benzyle, un alcanoyle en $C_1$-$C_4$ ou un β-hydroxyalkyle en $C_2$-$C_6$.

3. Pyrrolidones selon la revendication 2, dans lesquelles n est égal à 1, $R_1$ représente un radical hydroxy dont l'atome d'hydrogène peut être échangé contre un équivalent de Ca, Mg, Al, Zn, Co ou Ni, ou représente un alcoxy en $C_1$-$C_6$, un amino, un alkylamino en $C_1$-$C_6$ ou un di-($C_1$-$C_6$-alkyl)-amino, m est égal à 1 et $R_2$ représente un radical de formule (XIII) dans lequel p est égal à 0, $R_4$ représente H et $R_{16}$ représente H, un méthyle ou un benzyle.

4. Pyrrolidones de formule (III) selon la revendication 1 dans lesquelles $R_1'$ représente l'oxygène, $R_2'$ représente un radical répondant à la formule (XXI)

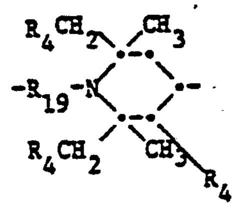

(XXI)

dans laquelle $R_4$ représente H et $R_{19}$ représente un radical éthylène, méthyl-2 éthylène, éthyl-2 éthylène, phényl-2 éthylène, butène-2 ylène ou p-phénylène-diméthylène, et E représente H ou un alcoxy en $C_1$-$C_6$.

5. Pyrrolidones de formule (III) selon la revendication 1 dans lesquelles $R_1'$ représente l'oxygène, $R_2'$ représente un radical propylène-1,3 qui porte, en position 2, un radical (XIII) selon la revendication 2 dans lequel p est égal à 0, $R_4$ représente H et $R_{16}$ représente H, un méthyle ou un benzyle, et E représente H ou un alcoxy en $C_1$-$C_6$.

6. Pyrrolidone selon la revendication 1, en l'espèce la pentaméthyl-1,2,2,6,6 (méthoxycarbonyl-4 pyrrolidone-2 yl-1)-4 pipéridine.

7. Pyrrolidone selon la revendication 1, en l'espèce la tétraméthyl-2,2,6,6 (méthoxycarbonyl-4 pyrrolidone-2-yl-1)-4 pipéridine.

8. Pyrrolidone selon la revendication 1, en l'espèce le tétrakis-[(pentaméthyl-1,2,2,6,6 pipéridyl-4)-1 pyrrolidone-2 carboxylate-4] du pentaérythritol.

9. Procédé de préparation de pyrrolidones de formule (I) selon la revendication 1, procédé caractérisé en ce qu'on fait réagir, dans des conditions de cyclisation, l'acide itaconique, ou un ester de cet acide, avec une amine de formule (XXIII)

$R_2$-$NH_2$

(XXIII)

+

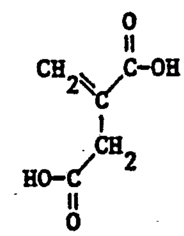

et, si on le désire, dans les pyrrolidones de formule (I) ainsi obtenues on transestérifie ou estérifie, on saponifie ou on amide le groupe hydroxy $R_1$ libre ou estérifié, ou on forme un sel du radical correspondant.

10. Composition constituée d'un polymère et d'au moins un composé de formule (I) selon l'une quelconque des revendications 1 à 9.

11. Composition selon la revendication 10, caractérisée en ce que le polymère est une polyoléfine, un polymère du styrène, un polyamide ou un polyuréthanne.

12. Procédé pour stabiliser des polymères, procédé caractérisé en ce qu'on ajoute au polymère au moins un composé de formule (I) selon l'une quelconque des revendications 1 à 9.